(19) Europäisches Patentamt
European Patent Office
Office européen des brevets

(11) Veröffentlichungsnummer: **0 131 749 B1**

(12) **EUROPÄISCHE PATENTSCHRIFT**

(45) Veröffentlichungstag der Patentschrift: **18.01.89**

(51) Int. Cl.⁴: **C 09 B 23/10**, C 09 B 62/04, D 06 P 1/42, D 21 H 3/80

(21) Anmeldenummer: **84106655.8**

(22) Anmeldetag: **12.06.84**

(54) **Kationische Enaminfarbstoffe, ihre Herstellung und Verwendung.**

(30) Priorität: **21.06.83 DE 3322318**

(43) Veröffentlichungstag der Anmeldung: **23.01.85 Patentblatt 85/4**

(45) Bekanntmachung des Hinweises auf die Patenterteilung: **18.01.89 Patentblatt 89/3**

(84) Benannte Vertragsstaaten: **CH DE FR GB LI**

(56) Entgegenhaltungen:
**EP-A- 0 038 299**
**EP-A- 0 044 061**
**DE-A- 2 503 098**
**GB-A- 2 011 457**

**Methoden der organischen Chemie (HOUBEN-WEYL), Bd. V/4 (1960), Seiten 710-712**
**Chem. Ber. 88 (1955), Seiten 26-34**
**J. Soc. Dyers Colour 53 (1937), Seiten 424-425**

(73) Patentinhaber: **BAYER AG, Konzernverwaltung RP Patentabteilung, D-5090 Leverkusen 1 Bayerwerk (DE)**

(72) Erfinder: **Meisel, Karlheinrich, Dr., Carl-von-Ossietzky-Strasse 24, D-5090 Leverkusen 1 (DE)**
Erfinder: **Raue, Roderich, Dr., Berta-von-Suttner-Strasse 48, D-5090 Leverkusen 1 (DE)**

**EP 0 131 749 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gegenstand der Erfindung sind kationische Enaminfarbstoffe der allgemeinen Formel

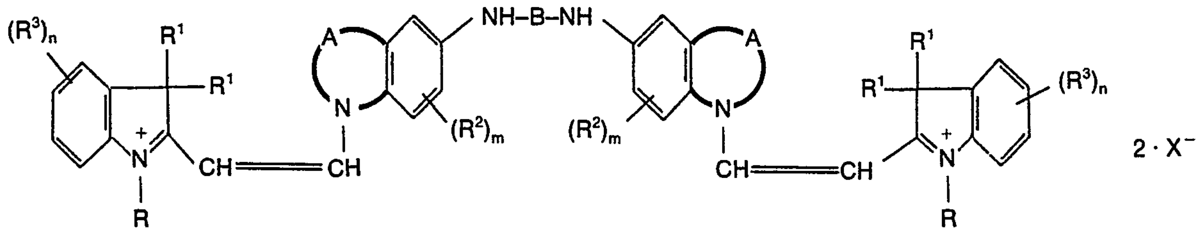

(I)

in welcher

R und $R^1$ unabhängig voneinander für Alkyl steht, wobei die beiden Reste $R^1$ auch zu einem Ring geschlossen sein können,

$R^2$ für Alkyl, Alkoxy oder Halogen,

$R^3$ für Alkyl, Halogen, Alkoxy, Aryl, Aryloxy, Aralkoxy, Aralkyl, Carboxyl, einen Carbonsäurealkylester, eine gegebenenfalls durch 1 oder 2 Alkylreste substituierte Carbonamid- oder Sulfonamidgruppe, Alkylsulfonyl, Arylsulfonyl, eine Cyan-, Nitro- oder Acylgruppe, und

A für eine $-(CH_2)_2-$ oder $-(CH_2)_3$-Gruppe, die gegebenenfalls durch Alkyl weiter substituiert sind, stehen,

B einem Rest der Formeln

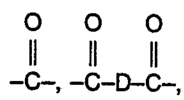

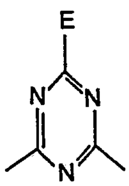

oder

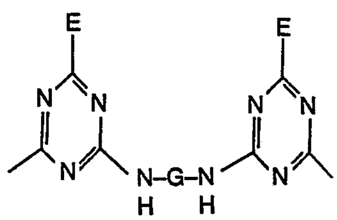

entspricht,

in welchem

D für Alkylen oder Arylen,

E für Halogen, Hydroxyl, Alkoxy oder für einen Rest der Formeln

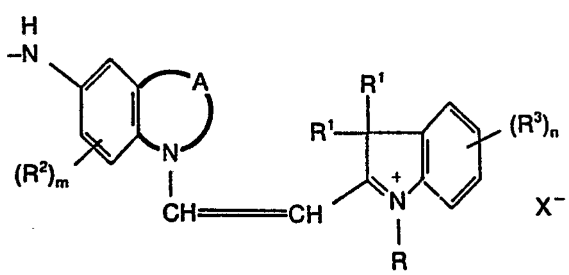

oder

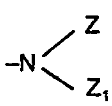

stehen,

worin

Z und $Z^1$ unabhängig voneinander Wasserstoff oder den Rest $-Y-Z^2$ bezeichnen, worin

Y für Alkylen und

$Z^2$ für Wasserstoff, Hydroxyl, Pyridinium oder die Reste

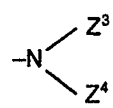

oder

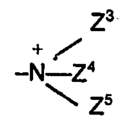

$X^-$

stehen,

worin

$Z^3$, $Z^4$ und $Z^5$ unabhängig voneinander Wasserstoff oder Alkyl bedeuten,

$Z^3$ ausserdem für Aryl, Aralkyl oder den Rest

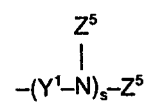

steht, worin

$Y^1$ für Alkylen,

s für 1 bis 8 stehen,

oder

Z und $Z^1$ sowie $Z^3$ und $Z^4$ ringgeschlossen sind und zusammen mit dem N-Atom einen Pyrrolidin-, Morpholin-, Piperidin- oder Piperazin-Ring bilden, die durch $C_1$–$C_4$-Alkyl substituiert sein können,

G Alkylen, Arylen oder einen Rest der Formel

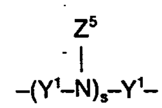

darstellt,

m und n unabhängig voneinander für 0, 1 oder 2 und

$X^-$ für ein Anion stehen,

und worin die cyclischen und acyclischen Reste durch in der Farbstoffchemie übliche nichtionische Reste substituiert sein können, ihre Herstellung und ihre Verwendung zum Färben von natürlichen und synthetischen kationisch anfärbbaren Substraten und Massen, insbesondere Papier.

Unter Halogen wird vorzugsweise Fluor, Chlor oder Brom verstanden.

Als Anion $X^{(-)}$ kommen übliche farblose organische und anorganische Anionen beispielsweise Chlorid, Bromid, Jodid, Hydroxyl, Hydrogensulfat,

Sulfat, Nitrat, Dihydrogenphosphat, Hydrogenphosphat, Phosphat, Carbonat, Methosulfat, Ethosulfat, Acetat, Propionat, Benzolsulfonat und Toluolsulfonat in Betracht.

Das Anion ist im allgemeinen durch das Herstellungsverfahren gegeben. Vorzugsweise liegen die Halogenide, insbesondere die Chloride vor. Die Anionen können in bekannter Weise gegen andere Anionen ausgetauscht werden.

Besonders zu nennen sind Enaminfarbstoffe der allgemeinen Formel

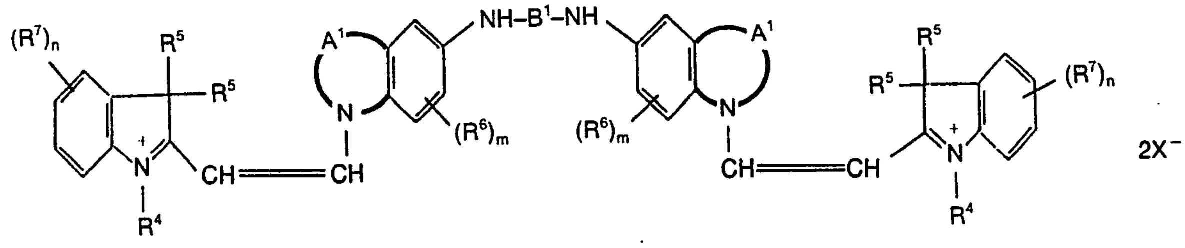

(II),

in welcher

$R^4$ für einen gegebenenfalls durch Hydroxy, Alkoxy mit 1 bis 4 C-Atomen, Acetoxy, Halogen, Cyan, Carboxy, $C_1$–$C_4$-Carbalkoxy, Carbonamido oder Acetyl substituierten Alkylrest mit 1 bis 4 C-Atomen,

$R^5$ für einen Alkylrest mit 1 bis 4 C-Atomen, wobei die beiden Reste $R^5$ auch zu einem Ring vorzugsweise einem Cyclopentyl- oder Cyclohexyl-Ring geschlossen sein können.

$R^6$ für einen Alkylrest mit 1 bis 4 C-Atomen, einen Alkoxyrest mit 1 bis 4 C-Atomen oder Halogen,

$R^7$ für einen Alkylrest mit 1 bis 4 C-Atomen, Halogen, Alkoxy mit 1 bis 4 C-Atomen, Phenoxy, Benzyloxy, Benzyl, Carboxyl, einen Carbonsäurealkylester mit 1 bis 4 C-Atomen, eine gegebenenfalls durch 1 oder 2 $C_1$- bis $C_4$-Alkylreste substituierte Carbonamid- oder Sulfonamidgruppe, Alkylsulfonyl mit 1 bis 4 C-Atomen, Phenylsulfonyl, eine Cyan-, Nitro-, Trifluormethyl-, Acetyl- oder Benzoylgruppe und

$A^1$ für eine $-(CH_2)_2$- oder $-(CH_2)_3$-Gruppe, die gegebenenfalls durch Alkylgruppen mit 1 bis 4 C-Atomen weiter substituiert sind, stehen,

$B^1$ einem Rest der Formeln

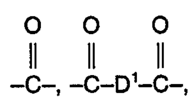

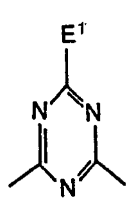

oder

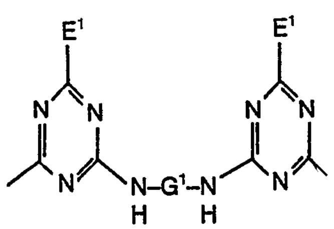

entspricht,

in welchem

$D^1$ für einen Alkylenrest mit 2 bis 6 C-Atomen, einen Phenylen- oder einen Naphthylenrest,

$E^1$ für Halogen, Hydroxyl, Alkoxy mit 1 bis 4 C-Atomen oder für einen Rest der Formeln

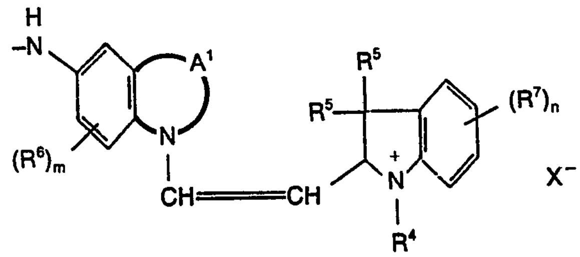

oder

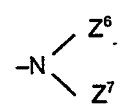

stehen,

worin

$Z^6$ und $Z^7$ unabhängig voneinander Wasserstoff oder den Rest $-Y^1-Z^8$ bezeichnen, worin

$Y^1$ für Alkylen mit 1 bis 6 C-Atomen,

$Z^8$ für Wasserstoff, Hydroxyl, Pyridinium oder die Reste

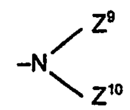

oder

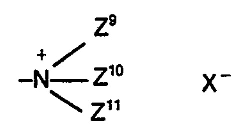

stehen,

worin

$Z^9$, $Z^{10}$ und $Z^{11}$ unabhängig voneinander Wasserstoff oder gegebenenfalls durch Hydroxyl substituiertes Alkyl mit 1 bis 4 C-Atomen bedeuten,

$Z^9$ ausserdem für Phenyl, Benzyl oder den Rest

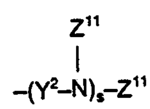

steht, worin

$Y^2$ für Alkylen mit 2 bis 4 C-Atomen und

s für 1 bis 8 stehen,

oder

$Z^6$ und $Z^7$ sowie $Z^9$ und $Z^{10}$ ringgeschlossen sind und zusammen mit dem N-Atom einen Pyrrolidin-, Morpholin-, Piperidin- oder Piperazin-Ring bilden, die durch $C_1$- bis $C_4$-Alkyl oder Amino-$C_1$- bis $C_4$-alkyl substituiert sein können,

$G^1$ einen Alkylenrest mit 2 bis 6 C-Atomen, einen Phenylenrest oder einen Rest der Formel

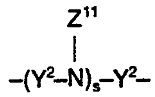

darstellt, worin

m und n unabhängig voneinander für 0, 1 oder 2 und

$X^-$ für ein Anion stehen.

Zwei bevorzugte Gruppen der neuen Farbstoffe entsprechen den allgemeinen Formeln

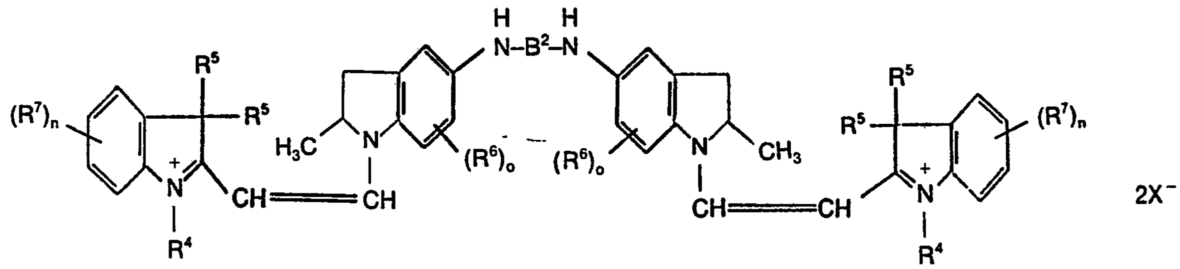

(III)

und

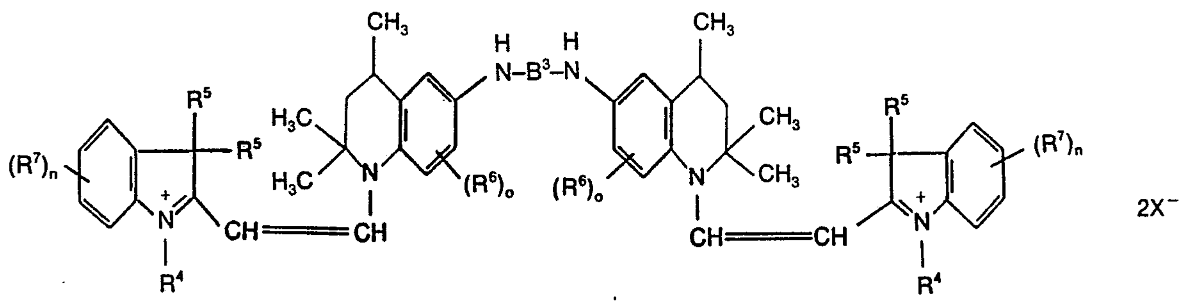

(IV),

worin

O für 0 oder 1, vorzugsweise 0

$B^2$ für einen Rest der Formeln

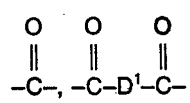

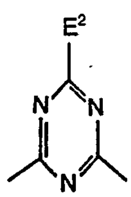

oder

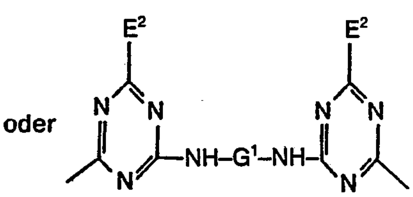

$E^2$ für Halogen, Hydroxyl, Alkoxy mit 1 bis 4 C-Atomen oder für einen Rest der Formeln

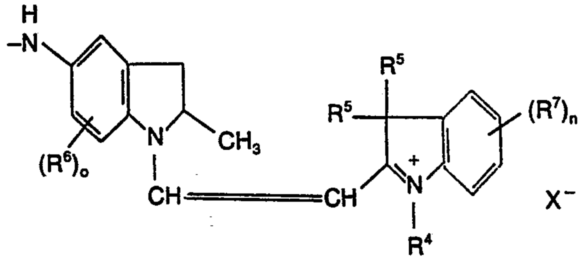

oder

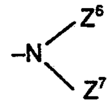

$B^3$ für einen Rest der Formeln

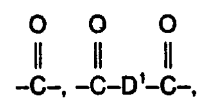

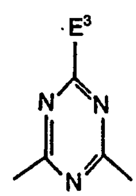

oder

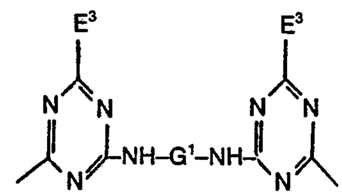

$E^3$ für Halogen, Hydroxyl, Alkoxy mit 1 bis 4 C-Atomen oder für einen Rest der Formeln

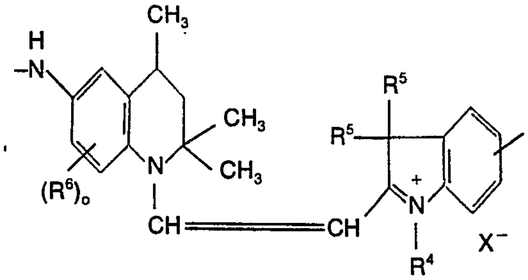

und

oder

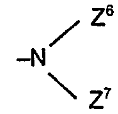

stehen, und
$R^4$, $R^5$, $R^6$, $R^7$, $D^1$, $G^1$, $Z^6$, $Z^7$, n und $X^-$ die gleiche Bedeutung wie in Formel (II) haben.

Von den Farbstoffen der Formeln (III) und (IV) sind besonders zu nennen die Farbstoffe mit
$R^4$ = Methyl, Ethyl oder $C_2$ bis $C_4$-Hydroxyalkyl,
$R^5$ = Methyl oder Ethyl,
$R^7$ = $C_1$ bis $C_4$-Alkyl, $C_1$ bis $C_4$-Alkoxy oder Halogen,
$B^2$ = 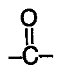

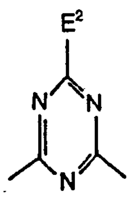

oder

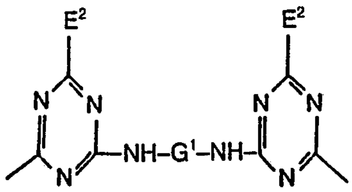

$E^2$ = Halogen, Hydroxyl, Alkoxy mit 1 bis 4 C-Atomen oder

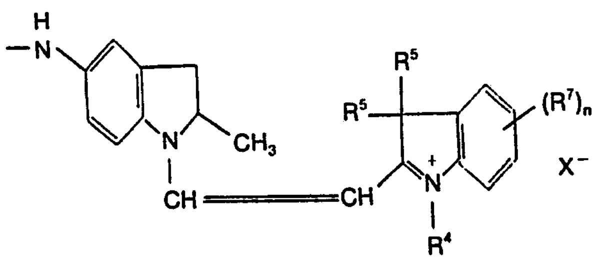

o = 0,
n = 0 oder 1,

$B^3$ = 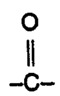 ,

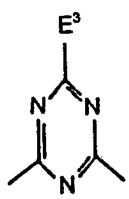

oder

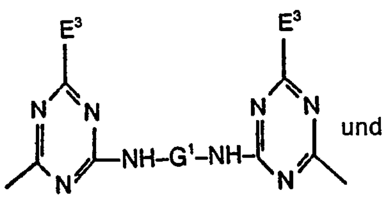

und

$E^3$ = Halogen, Hydroxyl, Alkoxy mit 1 bis 4 C-Atomen oder

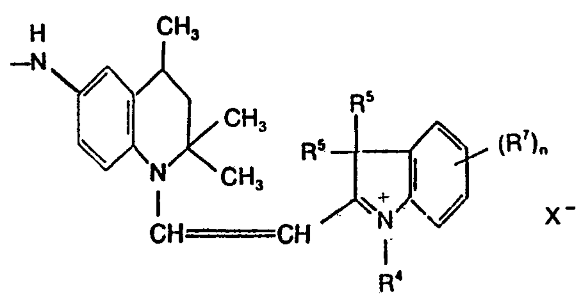

Man erhält die neuen Farbstoffe durch Umsetzung von Verbindungen der allgemeinen Formel

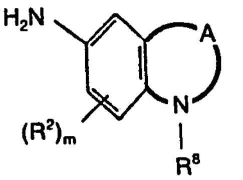

(V),

worin
$R^8$ für einen Acylrest, insbesondere einen $C_1$–$C_3$-Alkylcarbonylrest steht und
$R^2$, A und m die in Formel (I) angegebene Bedeutung haben, mit Dihalogenverbindungen der allgemeinen Formel

Hal–B–Hal (VI),

in welcher
B die gleiche Bedeutung wie in Formel (I) hat und
Hal für Halogen steht,
in wässriger oder organischer Lösung unter Zusatz von säurebindenden Mitteln zu Verbindungen der Formel

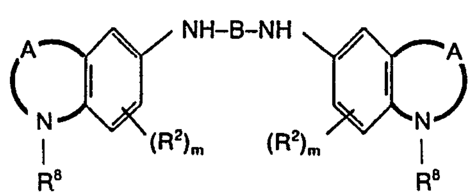

(VII),

und Umsetzung der Verbindungen der Formel (VII) nach Abspaltung des Acylrestes $R^8$ mit Verbindungen der allgemeinen Formel

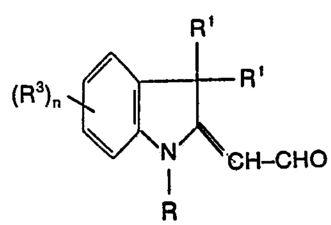

(VIII),

worin
R, $R^1$, $R^3$, m und n die in Formel (I) angegebene Bedeutung haben,
in saurem Medium.

Nach einem bevorzugten Verfahren kann man auch zunächst Verbindungen der allgemeinen Formel (V) mit Cyanurchlorid im Molverhältnis 1/1 zu Verbindungen der allgemeinen Formel

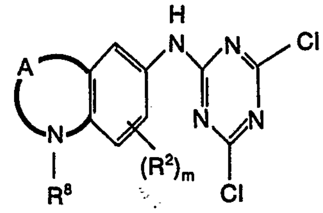

(IX),

worin
A, $R^2$, $R^8$ und m die vorstehend angegebene Bedeutung haben,
umsetzen, diese im Molverhältnis 2/1 mit einem Diamin der allgemeinen Formel

$H_2N–G–NH_2$ (X),

worin

G die oben angegebene Bedeutung hat, zu Verbindungen der Formel

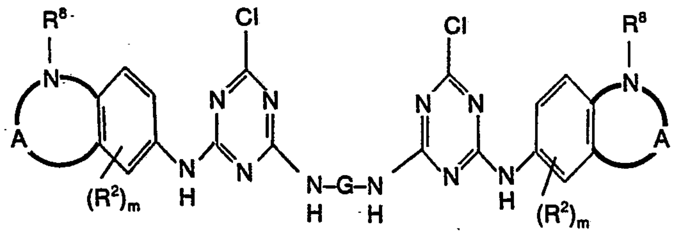

(XI),

umsetzen und diese nach Abspaltung des Acylrestes $R^8$ mit Verbindungen der Formel (VIII) zu den erfindungsgemässen Farbstoffen der Formel (I) kondensieren.

Nach einem weiteren bevorzugten Verfahren kann man Verbindungen der Formel (VII), in denen

$R^8$ den Formylrest bezeichnet,

mit Verbindungen der Formel

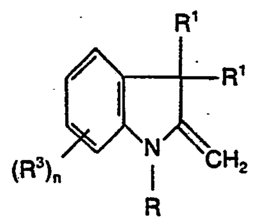

(XII),

worin

R, $R^1$, $R^3$ und n die oben angegebene Bedeutung haben,

unmittelbar zu Verbindungen der Formel (I) umsetzen.

Geeignete Verbindungen der allgemeinen Formel (VI) sind beispielsweise:
Phosgen, Bernsteinsäuredichlorid,
Glutarsäuredichlorid, Adipinsäuredichlorid,
Terephthalsäuredichlorid,
Isophthalsäuredichlorid, Cyanurchlorid,
Cyanurbromid, Cyanurfluorid
sowie Verbindungen, die durch Umsetzung von 2 mol Cyanurchlorid mit 1 mol
1,4-Phenylendiamin, 1,3-Phenylendiamin,
Ethylendiamin, 1,4-Diaminobutan,
1,6-Diamino-hexan, Diethylentriamin,
Triethylentetramin, Dipropylentriamin,
Tetraethylenpentamin, Pentaethylenhexamin,
Bis-(aminoethyl)-methylamin,
Bis-(aminoethyl)-ethylamin und
Bis-(aminoethyl)-butylamin
erhalten werden.

Als säurebindende Mittel eignen sich beispielsweise: Natriumbicarbonat, Kaliumbicarbonat, Natriumcarbonat, Kaliumcarbonat, Magnesiumoxid, Triethylamin und Triisopropanolamin.

Als Lösungsmittel für die Dimerisierung kommen in Frage: Wasser oder organische Lösungsmittel. Bevorzugt sind Lösungsmittel, die mit Wasser mischbar sind, wie Aceton, Dioxan, Tetrahydrofuran, Dimethylformamid, Dimethylacetamid, Tetramethylharnstoff und andere alkylsubstituierte Harnstoffe. Geeignet sind auch nicht mit Wasser mischbare Lösungsmittel, wie z.B. Chlorbenzol oder Dichlorbenzol.

Die Kondensation von Verbindungen der Formel (VII) nach Abspaltung des Acylrestes mit Verbindungen der Formel (VIII) bzw. von Verbindungen der Formel (VII), in denen $R^8$ für die Formylgruppe steht, mit Verbindungen der Formel (XII) erfolgt in einem Temperaturbereich zwischen 20 und 100 °C unter Zusatz wasserentziehender Mittel. Geeignet sind als Lösungs- bzw. Kondensationsmittel beispielsweise:

Phosphoroxychlorid, Oxalsäure, Phosphorpentachlorid und vorzugsweise Eisessig.

Die Farbstoffe eignen sich zum Färben anionisch modifizierter Synthesefasern, insbesondere zum Färben von Polyacrylnitrilmaterialien. Auf diesen Fasermaterialien werden hervorragende Lichtechtheiten erhalten. Sie eignen sich insbesondere zum Färben während des Spinnprozesses, da die Farbstoffe nicht ins Verstreckungsbad ausbluten. Weiterhin sind die Farbstoffe geeignet zum Anfärben von sauer modifizierten Polyesterfasern und natürlichen Fasermaterialien, wie Baumwolle, Zellwolle und Leder. Ganz besonders sind die Farbstoffe geeignet zum Färben von holzschliffhaltigem Papier und gebleichtem Sulfitzellstoff, wobei sie auf letzterem ein gutes Ziehvermögen und eine gute Nass- und Lichtechtheit aufweisen.

Kationische Enaminfarbstoffe mit mehreren N-heterocyclischen Resten, von denen mindestens einer einen quaternierten Indolenin-Rest darstellt, sind beispielsweise aus DE-A-2 503 098, EP-A-0 038 299 und EP-A-0 044 061 bekannt. Im Gegensatz zu den erfindungsgemässen Farbstoffen enthalten sie jedoch nicht gleichzeitig mindestens 2 quaternierte Indolenin-Reste und mindestens 2 Indolin- oder Tetrahydrochinolin-Reste.

Beispiel 1

20 g N,N′-Bis-(2,2,4-trimethyl-tetrahydrochinolin)-harnstoff werden in 200 ml Eisessig gelöst und mit 19,75 g 1,3,3-Trimethyl-2-methylen-indolin-ω-aldehyd 12 h auf 40 °C erhitzt. Wenn das Ausgangsmaterial feucht eingesetzt wird, ist der Zusatz von etwas Acetanhydrid vorteilhaft. Man trägt auf 1 l Wasser aus und fällt den Farbstoff durch Eintropfen von konzentrierter NaCl-Lösung. Man erhält 41 g des Farbstoffes der Formel

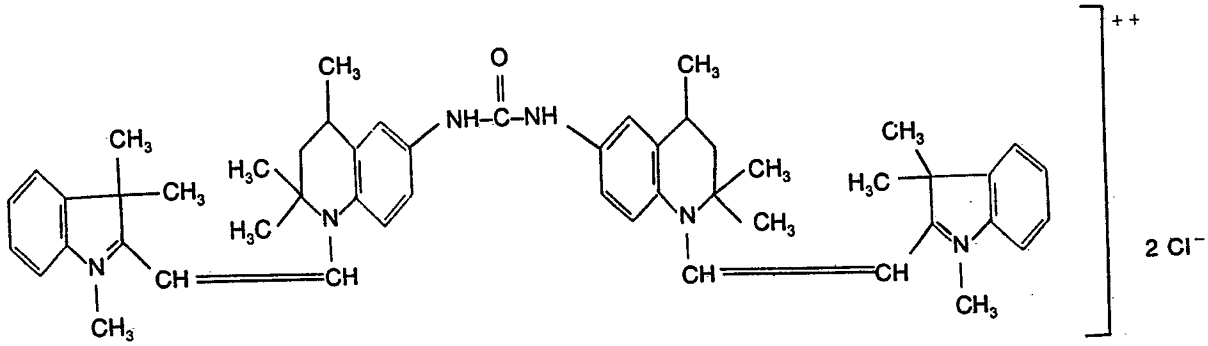

der gebleichten Sulfitzellstoff in guten Echtheiten anfärbt.

Die Herstellung des N,N′-Bis-(2,2,4-trimethyl-tetrahydrochinolin)-harnstoffs erfolgt in folgender Weise:

86,8 g N-Acetyl-2,2,4-trimethyl-tetrahydrochinolin werden in 600 ml Acetanhydrid gelöst und auf 0 °C gekühlt. Nun werden tropfenweise 28 g rauchende Salpetersäure in 50 ml Acetanhydrid eingetropft. Man erhält noch 30 min bei 0 °C und rührt dann über Nacht bei Raumtemperatur. Es wird auf Wasser ausgetragen und abgesaugt. Man erhält 89 g 1-Acetyl-2,2,4-trimethyl-6-nitro-tetrahydrochinolin vom Schmelzpunkt 91 °C.

52,4 g des vorstehend beschriebenen 1-Acetyl-2,2,4-trimethyl-6-nitro-tetrahydrochinolins werden in 400 ml Ethanol gelöst und mit 17 g Hydrazinhydrat auf 40 °C erhitzt und portionenweise mit 20 g Raney-Nickel in 350 ml Ethanol versetzt. Man hält 4 h auf 40 °C, filtriert vom Katalysator ab und engt die erhaltene Lösung ein. Das erhaltene Produkt kann direkt weiter umgesetzt werden. Zur Reinigung löst man in 500 ml Wasser unter Zusatz von 50 ml konz. Salzsäure und schüttelt mit 200 ml Chloroform aus. Die wässrige Phase wird mit konz. Natronlauge auf pH 8 gestellt und der ausgefallene Niederschlag abgesaugt.

Ausbeute: 41 g 1-Acetyl-2,2,4-trimethyl-6-amino-tetrahydrochinolin, Fp.: 155 °C.

40 g des vorstehend beschriebenen 1-Acetyl-2,2,4-trimethyl-6-amino-tetrahydrochinolins werden mit 20 g Natriumcarbonat und 200 ml Chlorbenzol auf 40 °C erwärmt und bis zur vollständigen Reaktion Phosgen eingeleitet. Nach Ausblasen mit Stickstoff wird der Rückstand abfiltriert und mit Wasser gewaschen. Der Rückstand wird in Essigester gelöst und mit verdünnter Salzsäure ausgeschüttelt. Beim Einengen des Essigesters fällt ein Niederschlag aus, der abgesaugt wird.

Ausbeute: 30 g der Verbindung der Formel

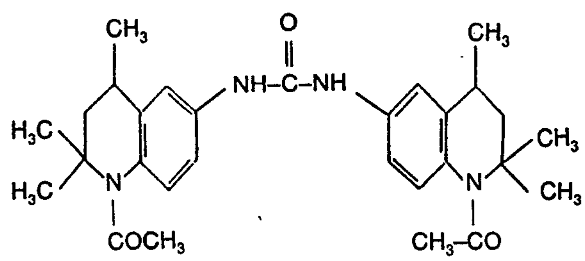

Schmelzpunkt: 121 °C.

30 g des vorstehend beschriebenen N,N′-Bis-(1-acetyl-2,2,4-trimethyl-tetrahydrochinolin)-harnstoffs werden in 200 ml konzentrierter Salzsäure 1 h auf Rückfluss erhitzt. Man trägt auf 800 ml Eis aus, stellt mit Natronlauge alkalisch und saugt ab.

Ausbeute: 24,5 g der Verbindung der Formel:

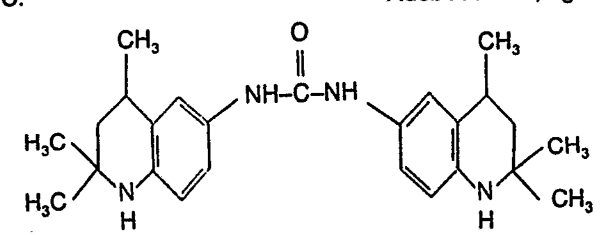

Beispiel 2

20 g des in Beispiel 1 beschriebenen Zwischenproduktes 1-Acetyl-2,2,4-trimethyl-6-amino-tetrahydrochinolin und 7,5 g Natriumhydrogencarbonat werden in 100 ml Tetramethylharnstoff gelöst und bei −5 bis −10 °C tropfenweise mit einer Lösung von 7,9 g Cyanurchlorid in 50 ml Tetramethylharnstoff versetzt. Man rührt 2 h bei −10 °C, dann 2 h bei Raumtemperatur und erhöht die Temperatur 1 h auf 40 °C. Man trägt die Lösung auf 400 ml Wasser aus und saugt ab. Der feuchte Niederschlag wird in 150 ml konz. Salzsäure 1 h zum Sieden erhitzt, die Lösung wird auf 400 g Eis ausgetragen, mit NaOH alkalisch gestellt und der Niederschlag abgesaugt. Der feuchte Niederschlag kann direkt weiter umgesetzt werden, jedoch muss der Wassergehalt bestimmt werden.

Man löst ihn in 200 ml Eisessig und gibt 17,3 g 1,3,3-Trimethyl-2-methylenindolin-ω-aldehyd zu. Man gibt eine dem Wassergehalt entsprechende Menge Acetanhydrid zu und hält 12 h bei 40–45 °C. Die Lösung wird auf 500 ml Wasser ausgetragen und der Farbstoff durch Eintropfen einer konz. NaCl-Lösung ausgefällt. Man erhält 35 g eines gelben Farbstoffes der Formel

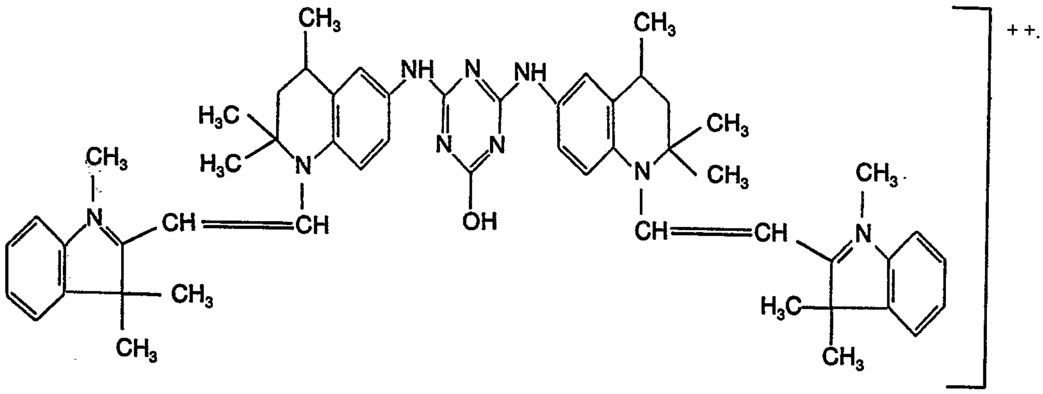

$2Cl^-$,

der gebleichten Sulfitzellstoff in guten Echtheiten bei nahezu ungefärbtem Abwasser anfärbt.
$\lambda_{max}$ = 444 nm.

Beispiel 3

35 g der Verbindung der Formel

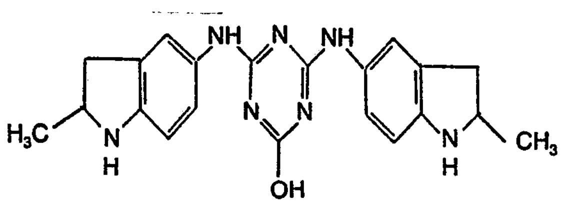

werden in 250 ml Eisessig gelöst und mit 36,2 g 1,3,3-Trimethyl-2-methylenindolin-ω-aldehyd 16 h auf 40 °C erhitzt. Wird das Ausgangsprodukt feucht eingesetzt, ist entsprechender Zusatz von Acetanhydrid erforderlich. Man trägt auf 800 ml Wasser aus und fällt den Farbstoff durch Eintropfen einer konz. NaCl-Lösung aus. Man erhält 24 g eines gelben Farbstoffes der Formel

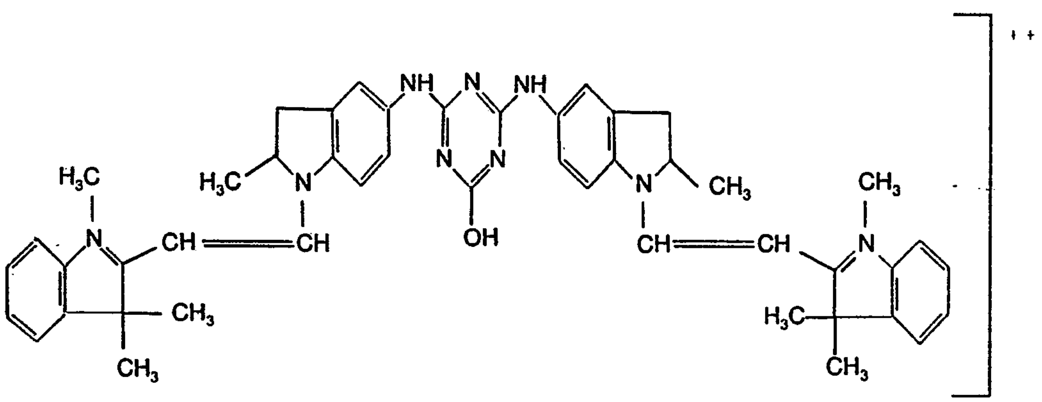

$2Cl^-$,

der Sulfitzellstoff in guten Echtheiten bei nahezu farblosem Abwasser anfärbt.

$\lambda_{max}$ = 444 nm

Das hierbei eingesetzte Ausgangsprodukt wird in folgender Weise hergestellt:

40 g 1-Acetyl-2-methyl-5-nitro-indolin werden in 400 ml Ethanol gelöst und mit 20 g Hydrazinhydrat auf 35–40 °C erwärmt. Man setzt 20 g Raney-Nickel in 250 ml Ethanol zu (schwaches Schäumen) und rührt über Nacht bei 40 °C. Dann wird der Katalysator abfiltriert und die Lösung eingedampft. Der Rückstand kann direkt weiter umgesetzt werden. Zur Reinigung löst man ihn in Wasser, stellt mit konz. Salzsäure auf pH 1 und schüttelt mit Chloroform dreimal aus. Die Wasserphase wird mit NaOH auf pH 8 gestellt. Es scheidet sich zunächst ein Öl ab, das nach einiger Zeit kristallisiert.

Ausbeute: 34 g 1-Acetyl-2-methyl-5-amino-indolin

Schmelzpunkt: 155–156 °C

18,4 g Cyanurchlorid werden in 250 ml Chloroform gelöst. Nach Zusatz von 8,4 g Natriumhydrogencarbonat wird die Suspension auf −10 °C gekühlt und tropfenweise mit einer Lösung von 19 g des oben beschriebenen 1-Acetyl-2-methyl-5-amino-indolins in 150 ml Chloroform versetzt, 12 h bei Raumtemperatur und 1 h bei 45 °C gerührt. Nun wird das Lösungsmittel abdestilliert, der Rückstand mit 200 ml Aceton ca. 10 min verrührt, abgesaugt und getrocknet.

Ausbeute: 27,2 g der Verbindung der Formel

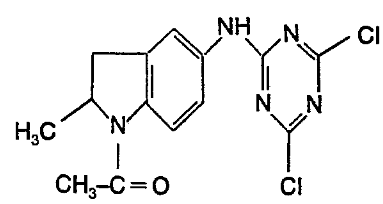

Fp.: 262–265 °C (Zers.)

Aus der Mutterlauge werden durch Einrotieren weitere 6,98 g gewonnen, die etwas verunreinigt sind.

33,8 g des vorstehend beschriebenen Zwischenproduktes werden in 100 ml Tetramethylharnstoff gelöst. Man gibt 9 g Natriumhydrogencarbonat zu und tropft bei −5 °C eine Lösung von 19 g 1-Acetyl-2-methyl-5-amino-indolin in 50 ml Tetramethylharnstoff hinzu. Man rührt 3 h bei Raumtemperatur und erhitzt 2 h auf 40 °C. Anschliessend wird auf 500 ml $H_2O$ ausgetragen und der Niederschlag abgesaugt. Der feuchte Niederschlag wird in 200 ml konz. Salzsäure 1 h zum Rückfluss erhitzt, auf 700 ml Wasser ausgetragen und mit NaOH alkalisch gestellt.

Ausbeute: 35 g der oben eingesetzten Verbindung.

Beispiel 4

4,66 g der Verbindung der Formel

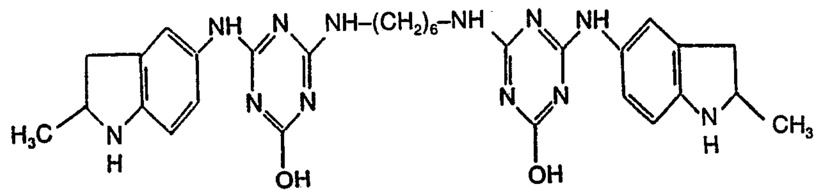

werden mit 50 ml Essigsäure und 2,74 g 1,3,3-Trimethyl-2-methylen-indolin-ω-aldehyd bei 40 °C 24 h verrührt. Man trägt auf 300 ml Wasser aus, klärt mit A-Kohle, salzt mit NaCl aus und trocknet bei 50 °C im Vakuum.

Ausbeute: 4,9 g des Farbstoffes der Formel

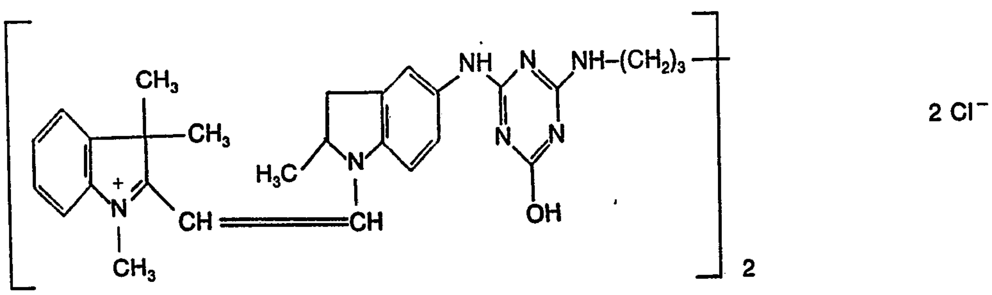

der Sulfitzellstoff in guten Echtheiten anfärbt.

$\lambda_{max}$ = 445 nm.

Das hierbei eingesetzte Ausgangsmaterial wird wie folgt hergestellt:

6,76 g des schon in Beispiel 3 beschriebenen Zwischenproduktes der Formel

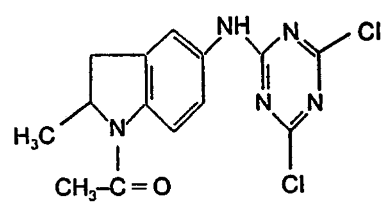

werden mit 50 ml Tetramethylharnstoff und 1,05 g Natriumcarbonat vorgelegt und tropfenweise mit einer Lösung aus 1,16 g Hexamethylendiamin in 50 ml Tetramethylharnstoff versetzt. Dabei steigt die Temperatur auf 30 °C an. Nach Zugabe einer Spatelspitze Kronenether wird 3 h auf 40 °C erwärmt. Man trägt auf 600 ml Wasser aus und saugt ab.

Ausbeute: 11,6 g der Verbindung der Formel

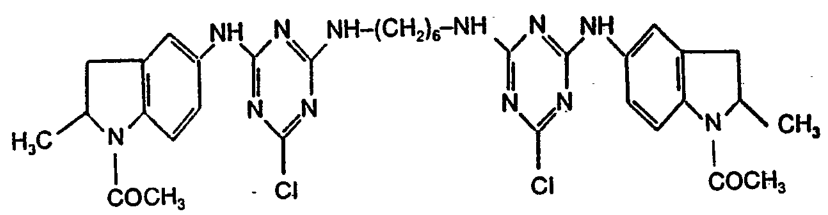

Das vorstehend erhaltene Produkt wird in 150 ml konz. Salzsäure 1 h am Rückfluss erhitzt, auf 1 l Wasser ausgetragen, mit NaOH auf pH 7 gestellt, abgesaugt und bei 50 °C getrocknet.

Ausbeute: 5,3 g der oben eingesetzten Ausgangsverbindung.

Beispiel 5

5,2 g der Verbindung der Formel

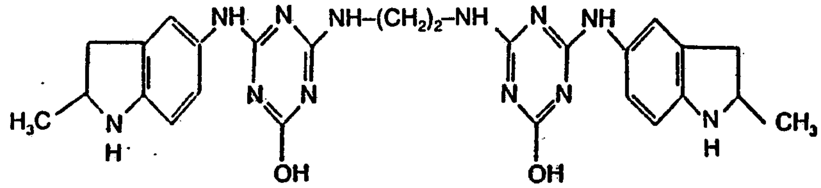

welche analog der im Beispiel 4 beschriebenen Ausgangsverbindung durch Ersatz von 1,16 g Hexamethylendiamin gegen 0,56 g Ethylendiamin erhalten wird, werden in 50 ml Eisessig mit 3,7 g 1,3,3-Trimethyl-2-methylen-indolin-ω-aldehyd 24 h auf 40 °C erhitzt.

Man trägt auf 100 ml Wasser aus, fällt den Farbstoff mit NaCl-Lösung aus, saugt ab und trocknet im Vakuum.

Ausbeute: 6,1 g eines gelben Farbstoffes der Formel

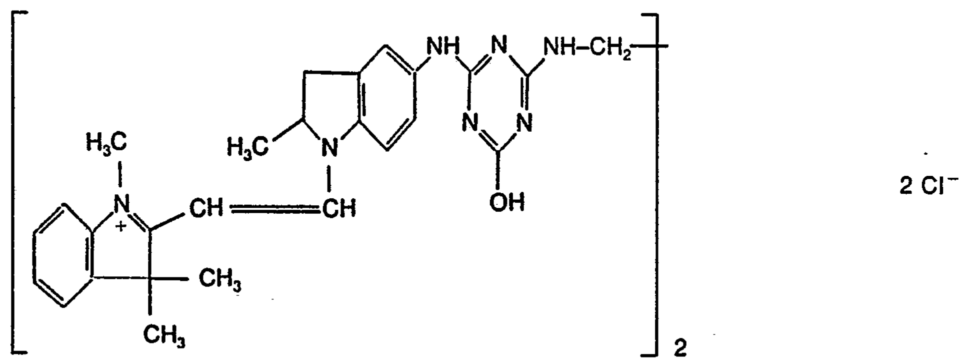

der Sulfitzellstoff in guten Echtheiten anfärbt.

$\lambda_{max}$ = 447 nm.

Beispiel 6

5,28 g der Verbindung der Formel

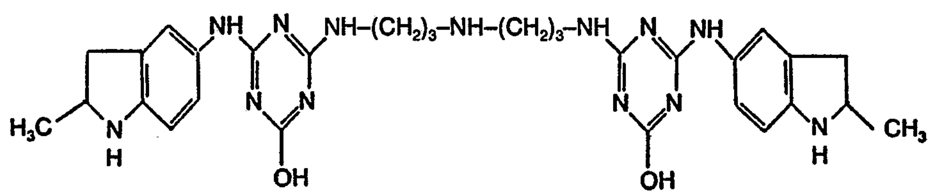

werden mit 3,04 g 1,3,3-Trimethyl-2-methylen-indolin-ω-aldehyd und 60 ml Eisessig 4 h auf 40 °C erwärmt. Man trägt auf 200 ml Wasser aus, fällt den Farbstoff mit NaCl-Lösung aus und saugt ihn ab.

Ausbeute: 6 g eines Farbstoffes der Formel

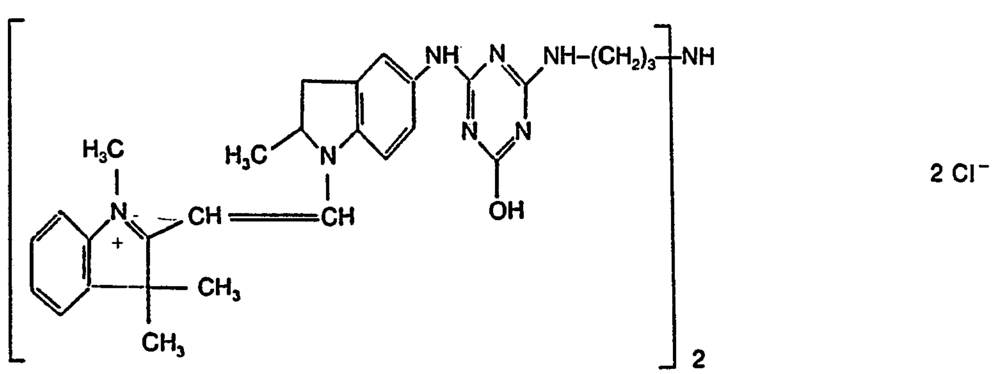

der gebleichten und ungebleichten Sulfitzellstoff in guten Echtheiten anfärbt.

$\lambda_{max}$ = 447 nm.

Das hierbei eingesetzte Ausgangsprodukt wird wie folgt erhalten:

6,76 g des Umsetzungsproduktes aus 1 mol Cyanurchlorid und 1 mol 1-Acetyl-2-methyl-5-amino-indolin werden mit 50 ml Tetramethylharnstoff und 2,1 g $Na_2CO_3$ vorgelegt und tropfenweise mit einer Lösung aus 1,31 g Dipropylentriamin in

50 ml Tetramethylharnstoff versetzt. Man erhitzt 4 h auf 40 °C, trägt auf 600 ml Wasser aus und saugt ab. Nach dem Trocknen erhält man 10 g Umsetzungsprodukt, welches in 70 ml konz. Salzsäure 1 h unter Rückfluss erhitzt wird. Man trägt auf 500 ml Wasser aus, stellt mit NaOH auf pH 7–8 und saugt ab. Nach Trocknen im Vakuum bei 50 °C erhält man 5,28 g des oben eingesetzten Ausgangsproduktes.

Beispiel 7

3,5 g der Verbindung der Formel

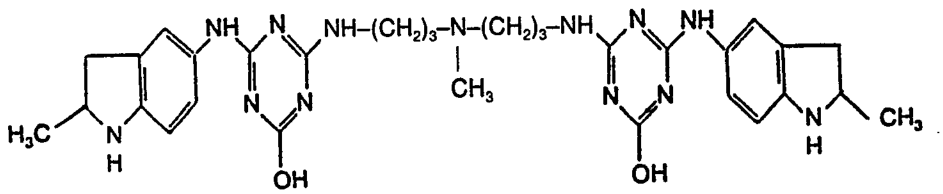

werden mit 1,7 g 1,3,3-Trimethyl-2-methylen-indolin-ω-aldehyd in 50 ml Eisessig bei 40 °C 24 h verrührt, auf 300 ml Wasser ausgetragen, mit NaCl ausgesalzen, abgesaugt und getrocknet. Man erhält 2,1 g eines Farbstoffes der Formel

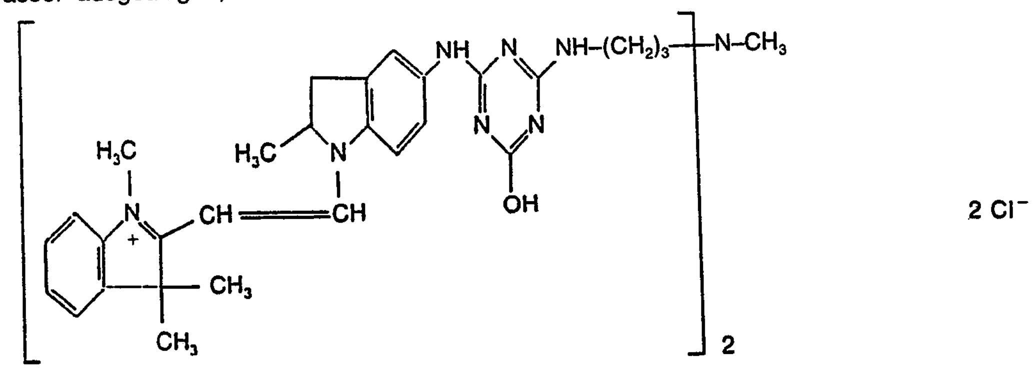

der Sulfitzellstoff in guten Echtheiten anfärbt.

$\lambda_{max}$ = 444 nm.

Das hierbei eingesetzte Ausgangsprodukt wird wie folgt hergestellt:

6,76 g des Umsetzungsproduktes aus 1 mol Cyanurchlorid und 1 mol 1-Acetyl-2-methyl-5-amino-indolin werden in 50 ml Tetramethylharnstoff mit 1,05 g $Na_2CO_3$ vorgelegt und bei 20–30 °C mit einer Lösung aus 1,45 g Methyl-bis-(3-amino-propyl)-amin in 50 ml Tetramethylharnstoff tropfenweise versetzt. Man erwärmt 3 h auf 40 °C, trägt auf 600 ml Wasser aus und saugt ab. Der feuchte Niederschlag wird mit 70 ml konz. Salzsäure 1 h unter Rückfluss erhitzt. Man trägt auf 500 ml Wasser aus, stellt mit NaOH auf pH 7–8, saugt ab und trocknet im Vakuum bei 50 °C.

Ausbeute: 3,5 g des oben eingesetzten Ausgangsproduktes.

Beispiel 8

4,5 g der Verbindung der Formel

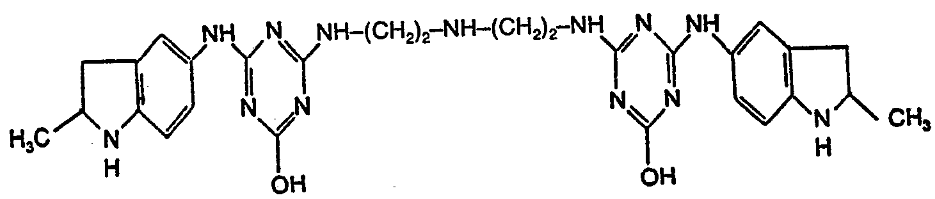

werden mit 2,72 g 1,3,3-Trimethyl-2-methylen-indolin-ω-aldehyd in 60 ml Eisessig 4 h auf 40 °C erhitzt. Man trägt auf 200 ml Wasser aus, fällt mit NaCl-Lösung und trocknet im Vakuum.

Man erhält 4,89 g eines Farbstoffes der Formel

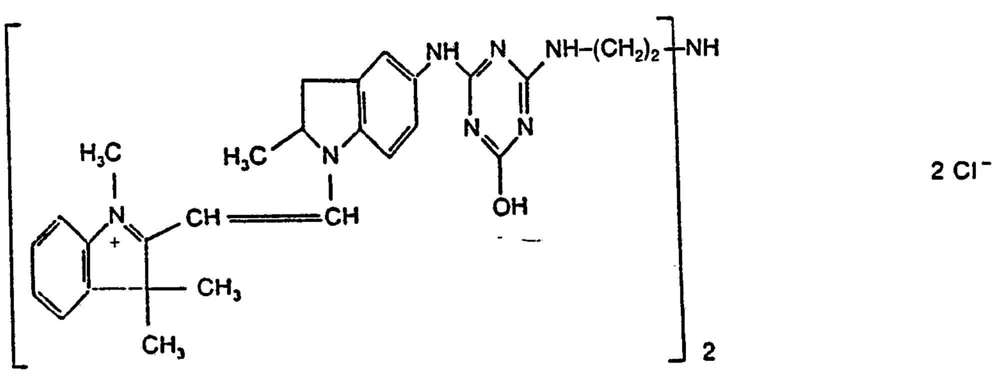

der Sulfitzellstoff in guten Echtheiten anfärbt.

$\lambda_{max}$ = 446 nm.

Das hierbei verwendete Ausgangsprodukt wird in folgender Weise hergestellt:

6,76 g des Umsetzungsproduktes aus 1 mol Cyanurchlorid und 1 mol 1-Acetyl-2-methyl-5-amino-indolin werden in 50 ml Tetramethylharnstoff mit 1,05 g $Na_2CO_3$ vorgelegt und tropfenweise mit einer Lösung aus 1,03 g Bis-(aminoethyl)-amin in 50 ml Tetramethylharnstoff versetzt. Man erwärmt 3 h auf 40 °C, trägt auf 60 ml Wasser aus und saugt ab. Der Niederschlag wird in 70 ml konz. Salzsäure 1 h unter Rückfluss zum Sieden erhitzt. Man trägt auf 500 ml Wasser aus, stellt mit NaOH auf pH 7–8, saugt ab und trocknet im Vakuum.

Ausbeute: 4,5 g der oben verwendeten Ausgangssubstanz.

Beispiel 9

5,2 g der Verbindung der Formel

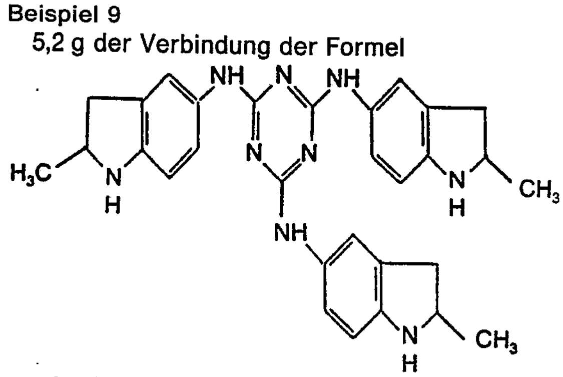

werden in 70 ml Eisessig mit 4,7 g 1,3,3-Trimethyl-2-methylen-indolin-ω-aldehyd 16 h auf 40 °C erhitzt. Man trägt auf 600 ml Wasser aus und fällt mit NaCl-Lösung, gegebenenfalls unter Zusatz eines Emulgators. Man erhält 7,7 g eines Farbstoffes der Formel

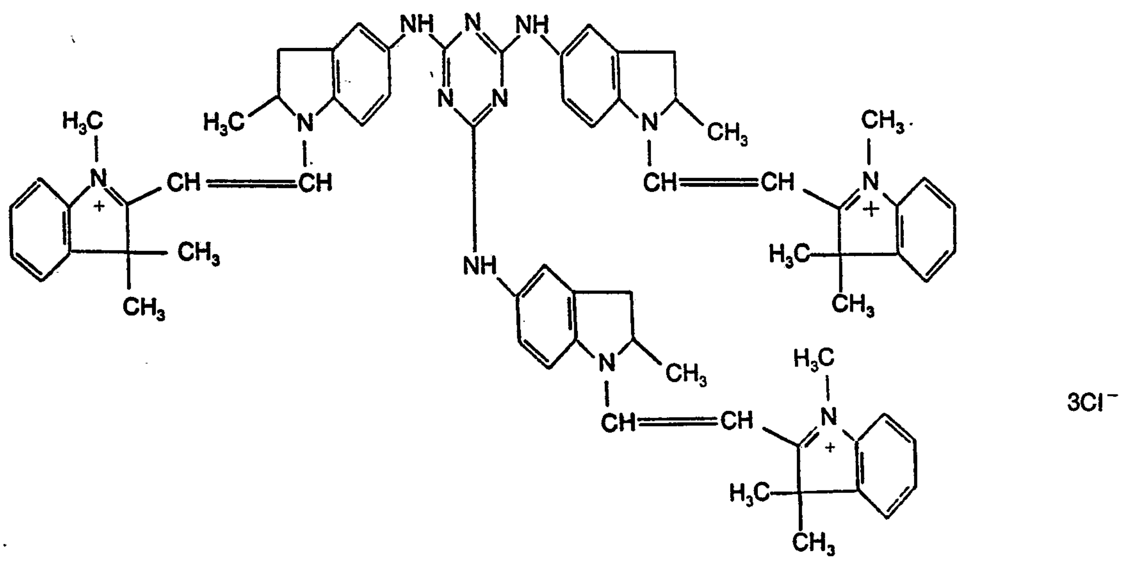

der Sulfitzellstoff in guten Echtheiten anfärbt.

$\lambda_{max}$ = 452 nm.

Die hierbei verwendete Ausgangsstubstanz wird wie folgt hergestellt:

11,1 g des in Beispiel 1 beschriebenen 1-Acetyl-2-methyl-5-amino-indolins werden mit 5,04 g Natriumhydrogencarbonat in 100 ml Chloroform vorgelegt und tropfenweise mit 3,78 g Cyanurchlorid in 50 ml Chloroform versetzt. Man erhitzt über Nacht unter Rückfluss zum Sieden und destilliert anschliessend das Chloroform ab. Der Rückstand wird aus Chloroform umkristallisiert.

Ausbeute 7,76 g der Verbindung der Formel

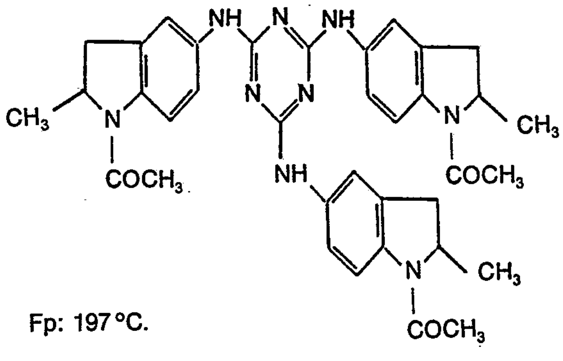

Fp: 197 °C.

7,5 g des vorstehend beschriebenen Zwischenproduktes werden mit 100 ml konz. Salzsäure 1 h auf 90 °C erhitzt. Man trägt auf 300 ml Wasser aus, stellt mit NaOH alkalisch und erhält nach Absaugen das oben verwendete Ausgangsprodukt.

Beispiel 10

Ein aus gebleichtem Sultizellstoff bestehender Trockenstoff wird im Holländer mit soviel Wasser angeschlagen uns bis zum Mahlgrad 40° SR gemahlen, dass der Trockengehalt etwas über 2,5% liegt, und anschliessend mit Wasser auf exakt 2,5% Trockengehalt des Dickstoffes eingestellt. 200 g dieses Dickstoffes werden mit 5 g einer 0,25%igen wässrigen Lösung des Farbstoffes gemäss Beispiel 2 versetzt und 5 min verrührt. Man verdünnt die Masse mit ca. 500 g Wasser auf 700 ml und stellt hieraus in bekannter Weise durch Absaugen über einen Blattbildner Papierblätter her. Sie weisen eine intensive, gelbe Färbung auf. Im Abwasser des Blattbildners ermittelt man fotometrisch die Menge des nicht an das Papier gebundenen Farbstoffes zu ca. 6%.

**Patentansprüche**

1. Kationische Enaminfarbstoffe der allgemeinen Formel

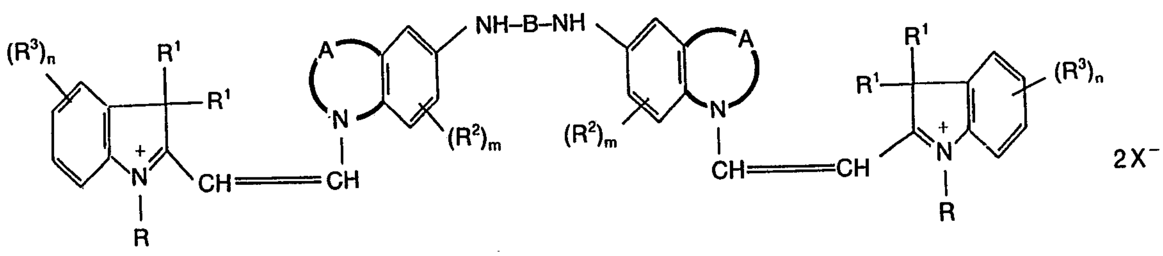

(I)

in welcher

R und $R^1$ unabhängig voneinander für Alkyl steht, wobei die beiden Reste $R^1$ auch zu einem Ring geschlossen sein können,

$R^2$ für Alkyl, Alkoxy oder Halogen,

$R^3$ für Alkyl, Halogen, Alkoxy, Aryloxy, Aryl, Aralkoxy, Aralkyl, Carboxyl, einen Carbonsäurealkylester, eine gegebenenfalls durch 1 oder 2 Alkylreste substituierte Carbonamid- oder Sulfonamidgruppe, Alkylsulfonyl, Arylsulfonyl, eine Cyan-, Nitro- oder Acylgruppe und

A für eine $-(CH_2)_2-$ oder $-(CH_2)_3$-Gruppe, die gegebenenfalls durch Alkyl weiter substituiert sind, stehen,

B einem Rest der Formeln

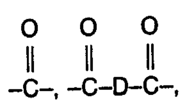

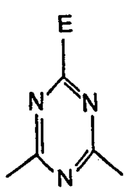

oder

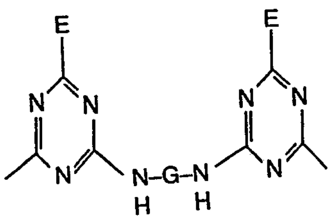

entspricht,

in welchem

D für Alkylen oder Arylen,

E für Halogen, Hydroxyl, Alkoxy oder für einen Rest der Formeln

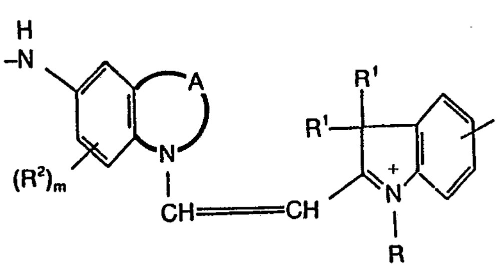

$X^-$

oder

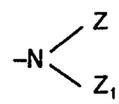

stehen

worin

Z und $Z^1$ unabhängig voneinander Wasserstoff oder den Rest $-Y-Z^2$ bezeichnen, worin

Y für Alkylen und

$Z^2$ für Wasserstoff, Hydroxyl, Pyridinium oder die Reste

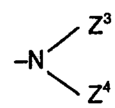

oder

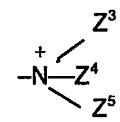

$X^-$

stehen

worin

$Z^3$, $Z^4$ und $Z^5$ unabhängig voneinander Wasserstoff oder Alkyl bedeuten,

$Z^3$ ausserdem für Aryl, Aralkyl oder den Rest

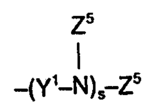

steht, worin

$Y^1$ für Alkylen und

s für 1 bis 8 stehen,

oder

Z und $Z^1$ sowie $Z^3$ und $Z^4$ ringgeschlossen sind und zusammen mit dem N-Atom einen Pyrrolidin-, Morpholin-, Piperidin- oder Piperazin-Ring bilden, die durch $C_1$- bis $C_4$-Alkyl substituiert sein können,

G Alkylen, Arylen oder einen Rest der Formel

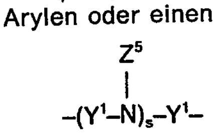

darstellt,

m und n unabhängig voneinander für 0, 1 oder 2 und

$X^-$ für ein Anion stehen, und worin die cyclischen und acyclischen Reste durch in der Farbstoffchemie übliche nichtionische Reste substituiert sein können.

2. Kationische Enaminfarbstoffe gemäss Anspruch 1 der allgemeinen Formel

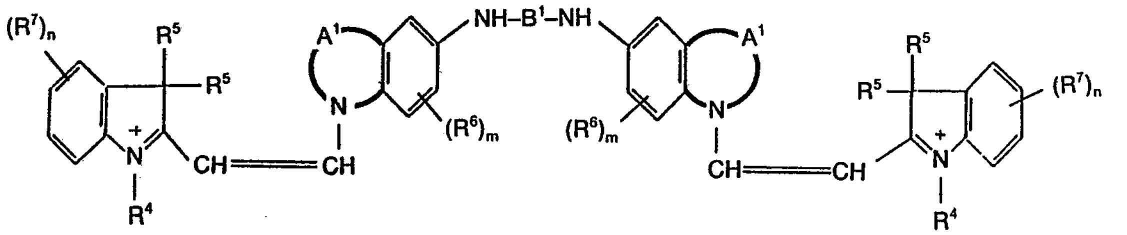
$2X^-$

(II),

in welcher

$R^4$ für einen gegebenenfalls durch Hydroxy, Alkoxy mit 1 bis 4 C-Atomen, Acetoxy, Halogen, Cyan, Carboxy, $C_1$– bis $C_4$-Carbalkoxy, Carbonamido oder Acetyl substituierten Alkylrest mit 1 bis 4 C-Atomen,

$R^5$ für einen Alkylrest mit 1 bis 4 C-Atomen, wobei die beiden Reste $R^5$ auch zu einem Ring vorzugsweise einem Cyclopentyl- oder Cyclohexyl-Ring geschlossen sein können,

$R^6$ für einen Alkylrest mit 1 bis 4 C-Atomen, einen Alkoxyrest mit 1 bis 4 C-Atomen oder Halogen,

$R^7$ für einen Alkylrest mit 1 bis 4 C-Atomen, Halogen, Alkoxy mit 1 bis 4 C-Atomen, Phenoxy, Benzyloxy, Benzyl, Carboxyl, einen Carbonsäurealkylester mit 1 bis 4 C-Atomen, eine gegebenenfalls durch 1 oder 2 $C_1$- bis $C_4$-Alkylreste substituierte Carbonamid- oder Sulfonamidgruppe, Alkylsulfonyl mit 1 bis 4 C-Atomen, Phenylsulfonyl, eine Cyan-, Nitro-, Trifluormethyl-, Acetyl- oder Benzoylgruppe und

$A^1$ für eine $-(CH_2)_2$- oder $-(CH_2)_3$-Gruppe, die gegebenenfalls durch Alkylgruppen mit 1 bis 4 C-Atomen weiter substituiert sind, stehen,

$B^1$ einem Rest der Formeln

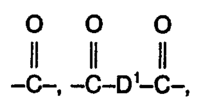

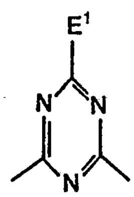

oder

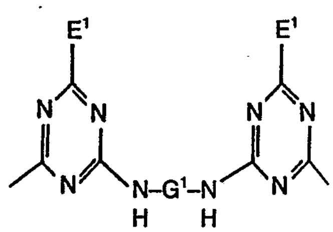

entspricht,

$D^1$ für einen Alkylenrest mit 2 bis 6 C-Atomen, einen Phenylen- oder einen Naphthylenrest,

$E^1$ für Halogen, Hydroxyl, Alkoxy mit 1 bis 4 C-Atomen oder für einen Rest der Formeln

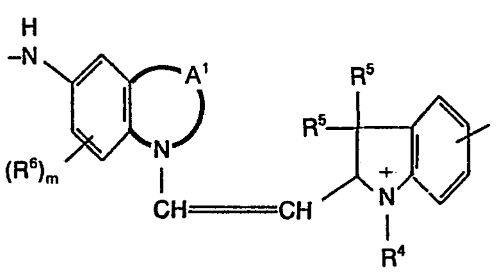
$X^-$

oder

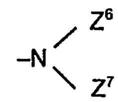

stehen,
worin

$Z^6$ und $Z^7$ unabhängig voneinander Wasserstoff oder den Rest $-Y^1-Z^8$ bezeichnen, wobei

$Y^1$ für Alkylen mit 1 bis 6 C-Atomen,

$Z^8$ für Wasserstoff, Hydroxyl, Pyridinium oder die Reste

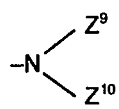

oder

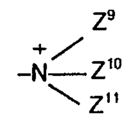
$X^-$

stehen,
worin

$Z^9$, $Z^{10}$ und $Z^{11}$ unabhängig voneinander Wasserstoff oder gegebenenfalls durch Hydroxyl substituiertes Alkyl mit 1 bis 4 C-Atomen bedeuten,

$Z^9$ ausserdem für Phenyl, Benzyl oder den Rest

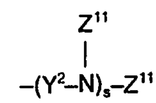

steht, worin

$Y^2$ für Alkylen mit 2 bis 4 C-Atomen und

s für 1 bis 8 stehen,

oder

$Z^6$ und $Z^7$ sowie $Z^9$ und $Z^{10}$ ringgeschlossen sind und zusammen mit dem N-Atom einen Pyrrolidin-, Morpholin-, Piperidin- oder Piperazin-Ring bilden, die durch $C_1$– bis $C_4$-Alkyl oder Amino-$C_1$– bis $C_4$-alkyl substituiert sein können,

$G^1$ einen Alkylenrest mit 2 bis 6 C-Atomen, einen Phenylenrest oder einen Rest der Formel

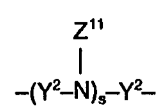

darstellt, worin

m und n unabhängig voneinander für 0, 1 oder 2 und

$X^-$ für ein Anion stehen.

3. Kationische Enaminfarbstoffe gemäss Anspruch 2 der allgemeinen Formel

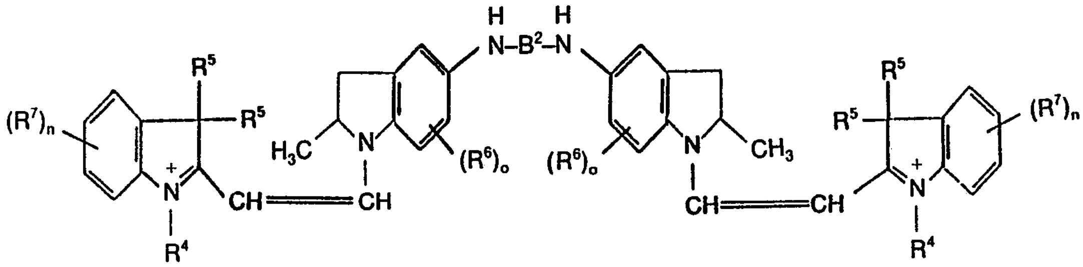

$2X^-$

(III)

in welcher
o für 0 oder 1, insbesondere 0,
$B^2$ für einen Rest der Formeln

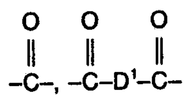

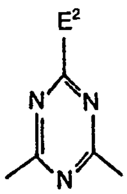

oder

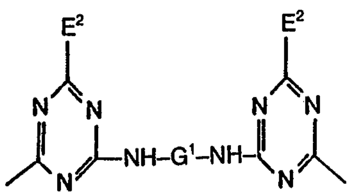

und
$E^2$ für Halogen, Hydroxyl, Alkoxy mit 1 bis 4 C-Atomen oder für einen Rest der Formeln

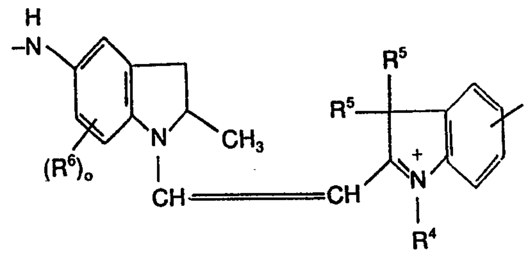

$X^-$

oder

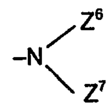

stehen, und
$R^4$, $R^5$, $R^6$, $R^7$, $D^1$, $G^1$, $Z^6$, $Z^7$, n und $X^-$ die gleiche Bedeutung wie in Anspruch 2 haben.

4. Kationische Enaminfarbstoffe gemäss Anspruch 2 der allgemeinen Formel

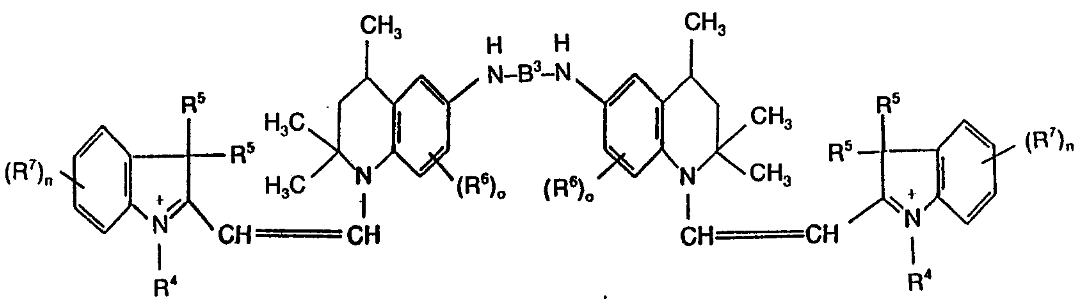

$2X^-$

worin
O für 0 oder 1, vorzugsweise 0,
$B^3$ für einen Rest der Formeln

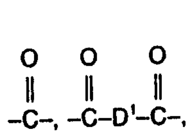

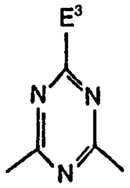

oder

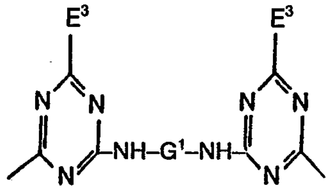

und
$E^3$ für Halogen, Hydroxyl, Alkoxy mit 1 bis 4 C-Atomen oder für einen Rest der Formeln

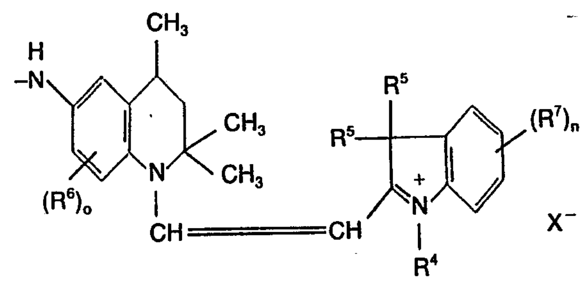

$X^-$

oder

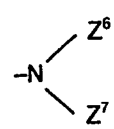

stehen, und worin
$R^4$, $R^5$, $R^6$, $R^7$, $D^1$, $G^1$, $Z^6$, $Z^7$, n und $X^-$ die gleiche Bedeutung wie in Anspruch 2 haben.

5. Kationische Enaminfarbstoffe der Formeln der Ansprüche 3 und 4, worin
$R^4$ für Methyl, Ethyl oder $C_2$- bis $C_4$-Hydroxyalkyl,

$R^5$ für Methyl oder Ethyl,

$R^7$ für $C_1$– bis $C_4$-Alkyl, Halogen oder $C_1$– bis $C_4$-Alkoxy,

$B^2$ für –CO-,

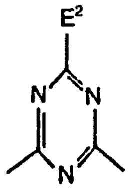

oder

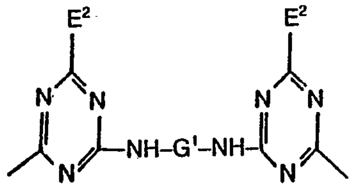

$E^2$ für Halogen, Hydroxyl, Alkoxy mit 1 bis 4 C-Atomen oder

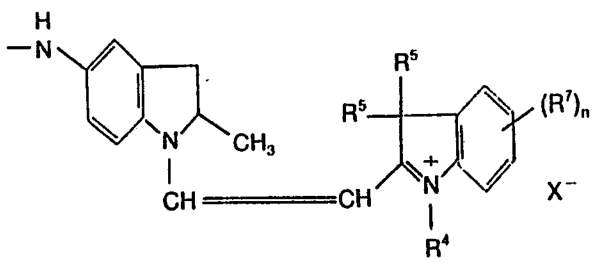

$B^3$ für –CO-,

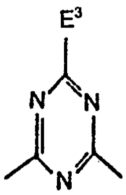

oder

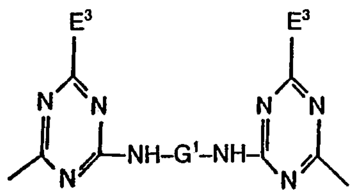

$E^3$ für Halogen, Hydroxyl, Alkoxy mit 1 bis 4 C-Atomen oder

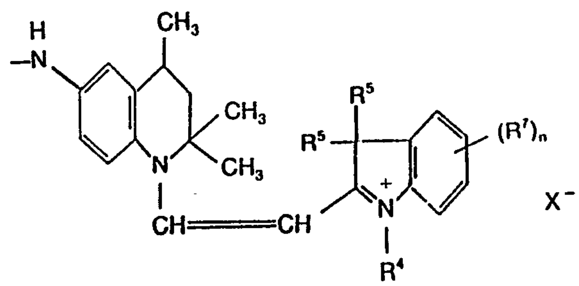

o für 0 und

n für 0 oder 1 stehen.

6. Verfahren zur Herstellung von Farbstoffen gemäss Anspruch 1, dadurch gekennzeichnet, dass man Verbindungen der allgemeinen Formel

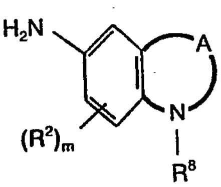

worin

$R^2$, A und m die in Anspruch 1 angegebene Bedeutung haben und

$R^8$ einen Acylrest bezeichnet,

mit Dihalogenverbindungen der allgemeinen Formel

Hal–B–Hal

in welcher

B die gleiche Bedeutung wie in Anspruch 1 besitzt und

Hal für Halogen steht,

zu Verbindungen der Formel

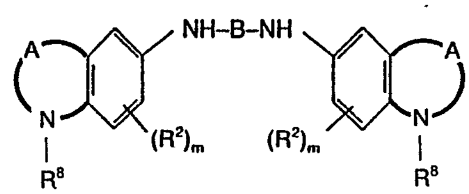

umsetzt und diese Verbindungen nach Abspaltung des Acylrestes $R^8$ mit Verbindungen der allgemeinen Formel

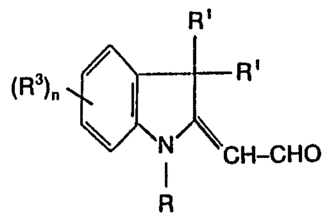

worin

R, $R^1$, $R^3$, m und n die in Anspruch 1 angegebene Bedeutung haben,

kondensiert.

7. Verfahren nach Anspruch 6, dadurch gekennzeichnet, dass man Verbindungen der allgemeinen Formel

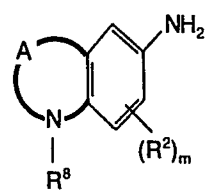

worin

A, $R^2$ und m die in Anspruch 1 angegebene Bedeutung haben und

$R^8$ für einen Acylrest steht,

mit Cyanurchlorid im Molverhältnis 1/1 zu Verbindungen der allgemeinen Formel

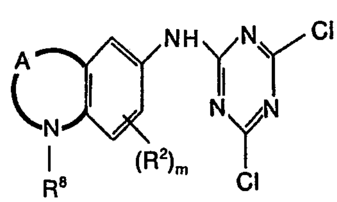

umsetzt, diese im Molverhältnis 2/1 mit einem Diamin der allgemeinen Formel

$H_2N–G–NH_2$,

worin

G die in Anspruch 1 angegebene Bedeutung hat, zu Verbindungen der allgemeinen Formel

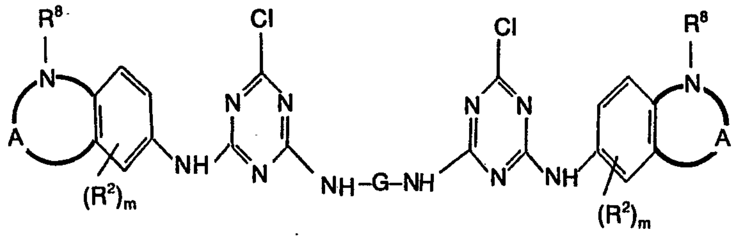

reagieren lässt und dieses Umsetzungsprodukt nach Abspaltung des Acylrestes $R^8$ schliesslich mit Verbindungen der allgemeinen Formel

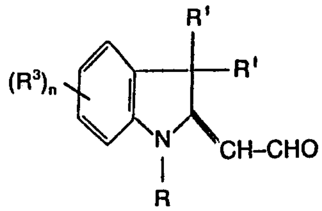

worin

R, $R^1$, $R^3$, m und n die gleiche Bedeutung wie in Anspruch 1 haben,

in saurem Medium kondensiert.

8. Verfahren nach Anspruch 6, dadurch gekennzeichnet, dass man Verbindungen der allgemeinen Formel

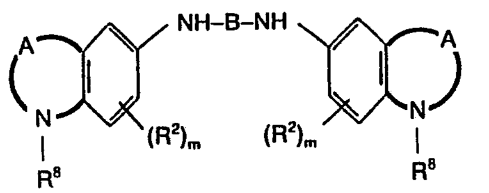

in welcher

$R^2$, A, B und m die in Anspruch 1 angegebene Bedeutung haben und

$R^8$ den Formylrest bezeichnet, mit Verbindungen der Formel

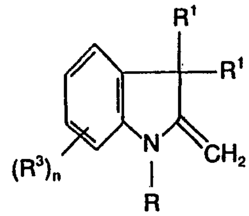

worin

R, $R^1$, $R^3$ und n die in Anspruch 1 angegebene Bedeutung haben,

unmittelbar zu Farbstoffen des Anspruchs 1 kondensiert.

9. Verfahren zum Färben von natürlichen und synthetischen kationisch anfärbbaren Substraten und Massen, dadurch gekennzeichnet, dass man Farbstoffe des Anspruchs 1 verwendet.

10. Verfahren zum Färben von Papier in der Masse und in der Oberfläche, dadurch gekennzeichnet, dass man Farbstoffe des Anspruchs 1 verwendet.

**Claims**

1. Cationic enamine dyestuffs of the general formula

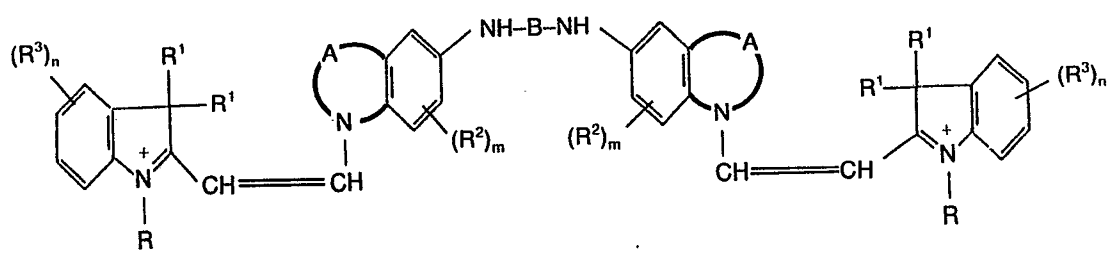

$2 \cdot X^-$

in which

R and $R^1$ independently of one another represent alkyl, and the two radicals $R^1$ can also be closed to form a ring,

$R^2$ represents alkyl, alkoxy or halogen,

$R^3$ represents alkyl, halogen, alkoxy, aryloxy, aryl, aralkoxy, aralkyl, carboxyl, a carboxylic acid alkyl ester, a carboxamide or sulphonamide group which is optionally substituted by 1 or 2 alkyl radicals, alkylsulphonyl, arylsulphonyl or a cyano, nitro or acyl group,

A represents a $-(CH_2)_2-$ or $-(CH_2)_3-$group which is optionally further substituted by alkyl,

B corresponds to a radical of the formula

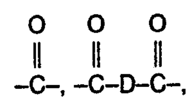

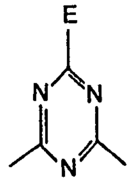

or

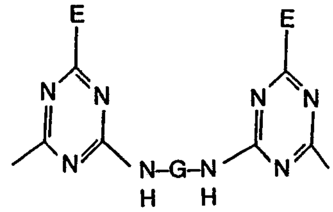

in which

D represents alkylene or arylene,

E represents halogen, hydroxyl, alkoxy or a radical of the formula

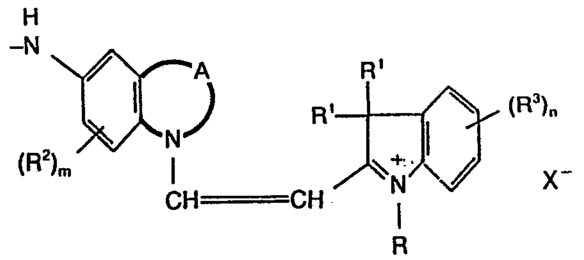

or

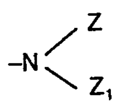

wherein

Z and $Z^1$ independently of one another designate hydrogen or the radical $-Y-Z^2$,

wherein

Y represents alkylene and

$Z^2$ represents hydrogen, hydroxyl, pyridinium or the radical

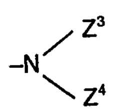

or

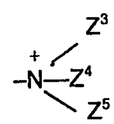

$X^-$

wherein

$Z^3$, $Z^4$ and $Z^5$ independently of one another denote hydrogen or aryl, and

$Z^3$ also represents aryl, aralkyl or the radical

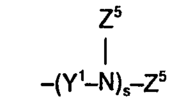

wherein

$Y^1$ represents alkylene and

s represents 1 to 8, or

Z and $Z^1$, and $Z^3$ and $Z^4$ are closed to form a ring and, together with the N atom, form a pyrrolidine, morpholine, piperidine or piperazine ring, which can be substituted by $C_1$– to $C_4$-alkyl,

G represents alkylene, arylene or a radical of the formula

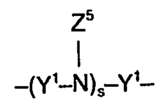

m and n independently of one another represent 0, 1 or 2 and

$X^-$ represents an anion,

and wherein the cyclic and acyclic radicals can be substituted by the non-ionic radicals customary in dyestuff chemistry.

2. Cationic enamine dyestuffs according to Claim 1, of the general formula

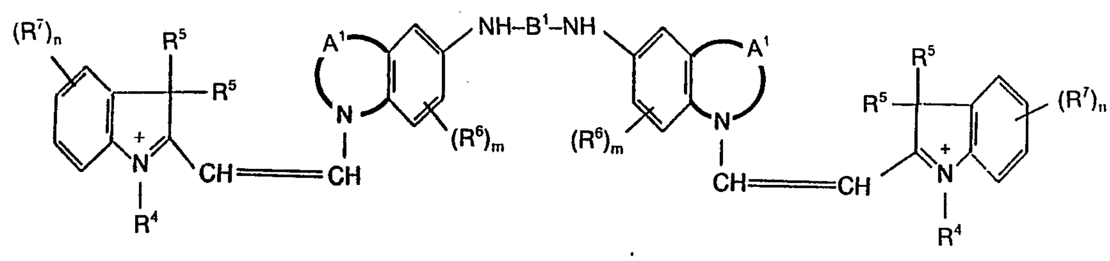

$2X^-$

in which

$R^4$ represents an alkyl radical which has 1 to 4 C atoms and is optionally substituted by hydroxyl, alkoxy with 1 to 4 C-atoms, acetoxy, halogen, cyano, carboxyl, $C_1$– to $C_4$-carbalkoxy, carboxamido or acetyl,

$R^5$ represents an alkyl radical with 1 to 4 C-atoms, it also being possible for the two radicals $R^5$ to be closed to form a ring, preferably a cyclopentyl or cyclohexyl ring,

$R^6$ represents an alkyl radical with 1 to 4 C atoms, an alkoxy radical with 1 to 4 C atoms or halogen,

$R^7$ represents an alkyl radical with 1 to 4 C atoms, halogen, alkoxy with 1 to 4 C atoms, phenoxy, benzyloxy, benzyl, carboxyl, a carboxylic acid alkyl ester with 1 to 4 C atoms, a carboxamide or sulphonamide group which is optionally substituted by 1 or 2 $C_1$– to $C_4$-alkyl radicals, alkylsulphonyl with 1 to 4 C atoms, phenylsulphonyl, or a cyano, nitro, trifluoromethyl, acetyl or benzoyl group,

$A^1$ represents a $-(CH_2)_2$- or $-(CH_2)_3$-group which is optionally further substituted by alkyl groups with 1 to 4 C atoms,

$B^1$ corresponds to a radical of the formula

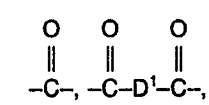

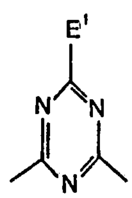

or

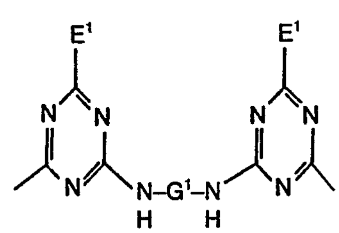

in which

$D^1$ represents an alkylene radical with 2 to 6 C atoms or a phenylene or naphthylene radical,

$E^1$ represents halogen, hydroxyl, alkoxy with 1 to 4 C atoms or a radical of the formula

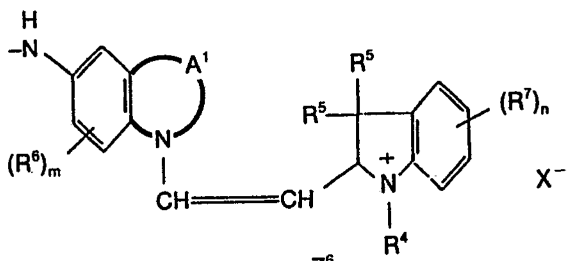

or

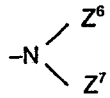

wherein

$Z^6$ and $Z^7$ independently of one another designate hydrogen or the radical $-Y^1-Z^8$,

wherein

$Y^1$ represents alkylene with 1 to 6 C atoms and

$Z^8$ represents hydrogen, hydroxyl, pyridinium or the radical

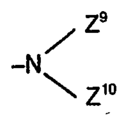

or

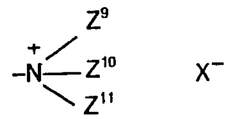

wherein

$Z^9$, $Z^{10}$ and $Z^{11}$ independently of one another denote hydrogen or alkyl which has 1 to 4 C atoms and is optionally substituted by hydroxyl, and

$Z^9$ also represents phenyl, benzyl or the radical

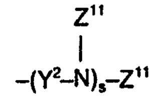

wherein

$Y^2$ represents alkylene with 2 to 4 C atoms and

s represents 1 to 8, or

$Z^6$ and $Z^7$, and $Z^9$ and $Z^{10}$ are closed to form a ring and, together with the N atom, form a pyrrolidine, morpholine, piperidine or piperazine ring, which can be substituted by $C_1$- to $C_4$-alkyl or amino-$C_1$- to $C_4$-alkyl,

$G^1$ represents an alkylene radical with 2 to 6 C atoms, a phenylene radical or a radical of the formula

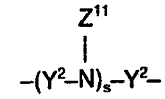

m and n independently of one another represent 0, 1 or 2 and

$X^-$ represents an anion.

3. Cationic enamine dyestuffs according to Claim 2, of the general formula

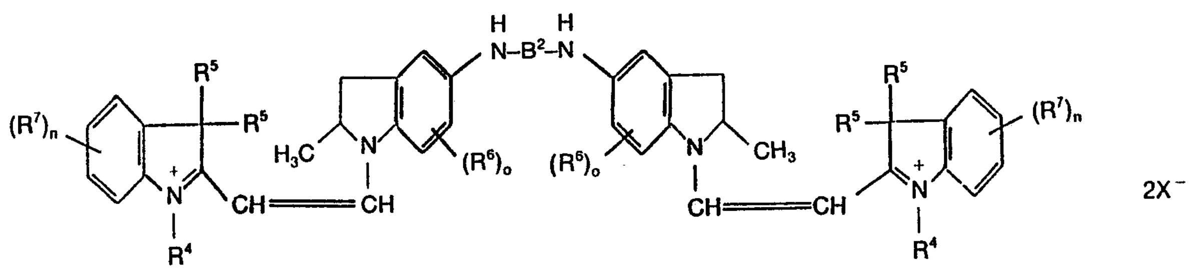

in which

o represents 0 or 1, in particular 0,

$B^2$ represents a radical of the formula

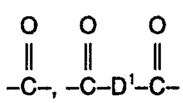

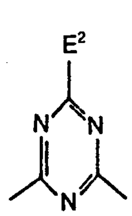

or

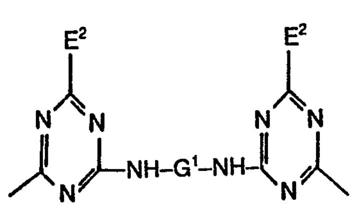

and

$E^2$ represents halogen, hydroxyl, alkoxy with 1 to 4 C atoms or a radical of the formula

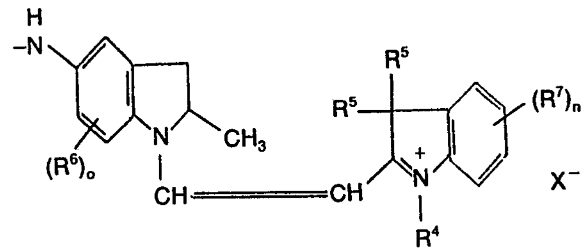

or

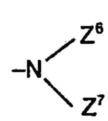

and

$R^4$, $R^5$, $R^6$, $R^7$, $D^1$, $G^1$, $Z^6$, $Z^7$, n and $X^-$ have the same meaning as in Claim 2.

4. Cationic enamine dyestuffs according to Claim 2, of the general formula

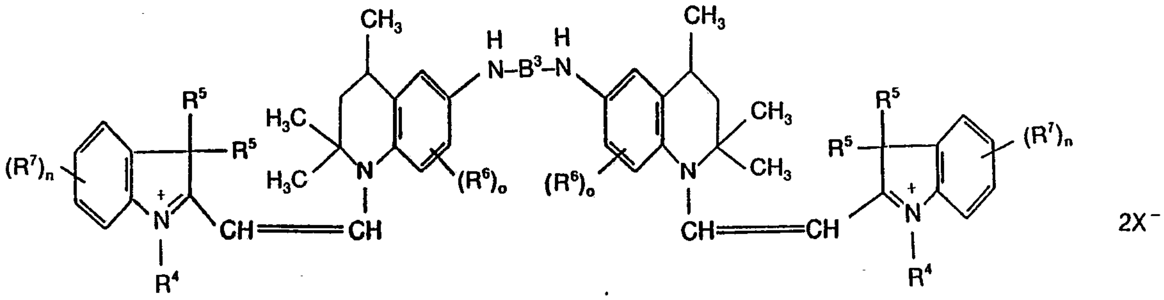

o represents 0 or 1, preferably 0,

$B^3$ represents a radical of the formula

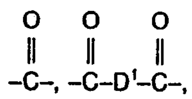

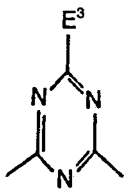

or

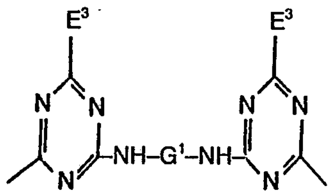

$E^3$ represents halogen, hydroxyl, alkoxy with 1 to 4 C atoms or a radical of the formula

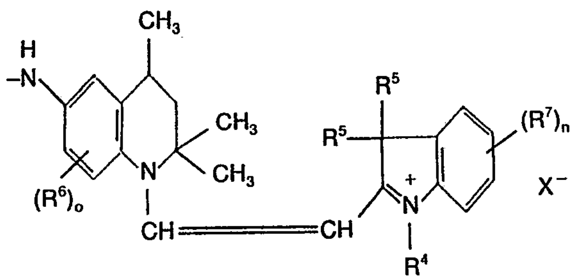

or

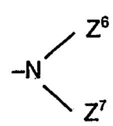

and wherein

$R^4$, $R^5$, $R^6$, $R^7$, $D^1$, $G^1$, $Z^6$, $Z^7$, n and $X^-$ have the same meaning as in Claim 2.

5. Cationic enamine dyestuffs of the formulae in Claims 3 and 4,
wherein

$R^4$ represents methyl, ethyl or $C_1$– to $C_4$-hydroxyalkyl,

$R^5$ represents methyl or ethyl,

$R^7$ represents $C_1$– to $C_4$-alkyl, halogen or $C_1$– to $C_4$-alkoxy,

$B^2$ represents –CO–,

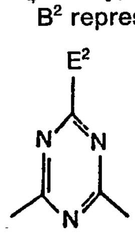

or

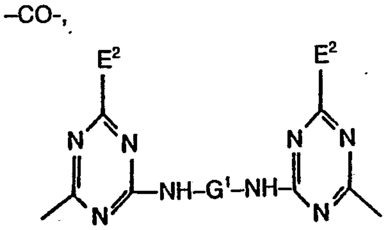

$E^2$ represents halogen, hydroxyl, alkoxy with 1 to 4 C atoms or

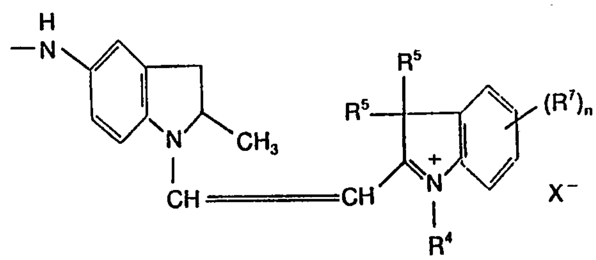

$B^3$ represents –CO–,

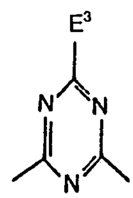

or

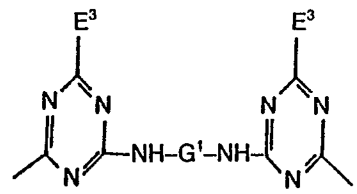

$E^3$ represents halogen, hydroxyl, alkoxy with 1 to 4 C atoms or

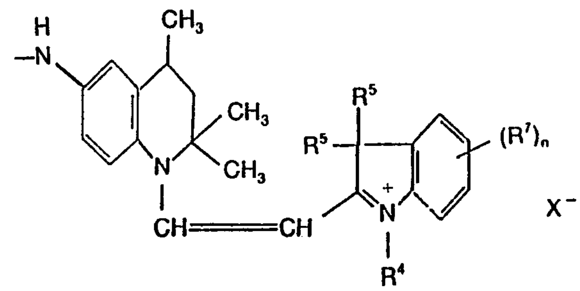

o represents 0 and

n represents 0 or 1.

6. Process for the preparation of dyestuffs according to Claim 1, characterised in that compounds of the general formula

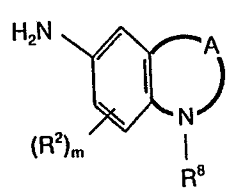

wherein

$R^2$, A and m have the meaning given in Claim 1 and

$R^8$ designates an acyl radical,

are reacted with dihalogeno compounds of the general formula

Hal–B–Hal

in which

B has the same meaning as in Claim 1 and

Hal represents halogen,

to give compounds of the formula

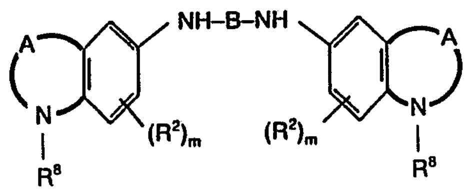

and these compounds, after the acyl radical $R^8$ has been split off, are subjected to a condensation reaction with compounds of the general formula

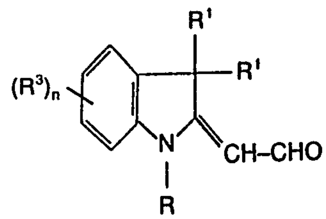

wherein

R, $R^1$, $R^3$, m and n have the meaning given in Claim 1.

7. Process according to Claim 6, characterised in that compounds of the general formula

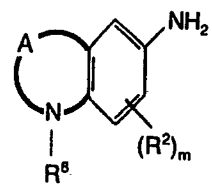

wherein

A, $R^2$ and m have the meaning given in Claim 1 and

$R^8$ represents an acyl radical,

are reacted with cyanuric chloride in a molar ratio of 1 : 1 to give compounds of the general formula

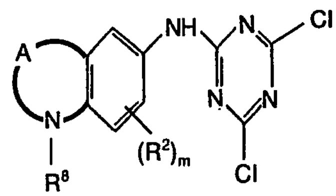

these compounds are reacted with a diamine of the general formula

$$H_2N-G-NH_2$$

wherein

G has the meaning given in Claim 1,

in a molar ratio of 2 : 1 to give compounds of the general formula

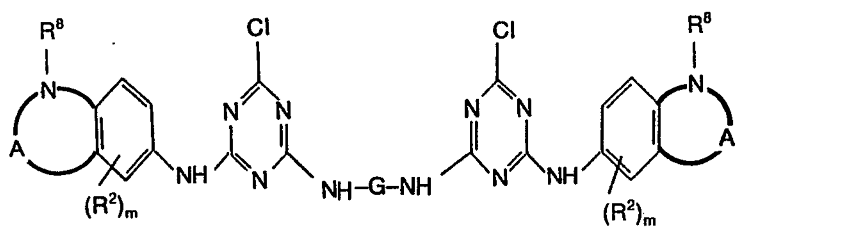

and this reaction product, after the acyl radical $R^8$ has been split off, is finally subjected to a condensation reaction with compounds of the general formula

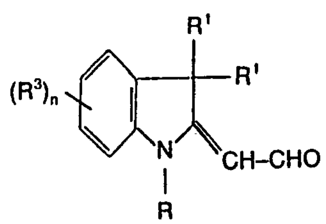

wherein

R, $R^1$, $R^3$, m and n have the same meaning as in Claim 1,

in an acid medium.

8. Process according to Claim 6, characterised in that compounds of the general formula

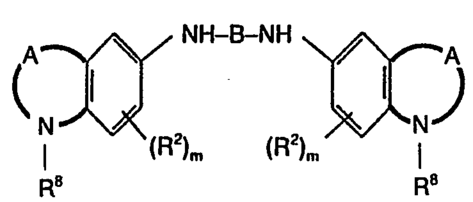

in which

$R^2$, A, B and m have the meaning given in Claim 1 and

$R^8$ designates the formyl radical,

are subjected to a condensation reaction directly with compounds of the formula

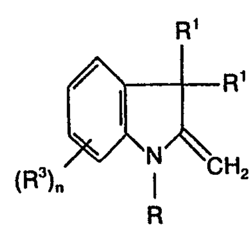

wherein

R, $R^1$, $R^3$ and n have the meaning given in Claim 1,

to give the dyestuffs of Claim 1.

9. Process for dyeing natural and synthetic substrates and compositions which can be dyed with cationic dyestuffs, characterised in that the dyestuffs of Claim 1 are used.

10. Process for beater-dyeing paper and dyeing the surface of paper, characterised in that the dyestuffs of Claim 1 are used.

**Revendications**

1.Colorants cationiques d'énamines de formule générale

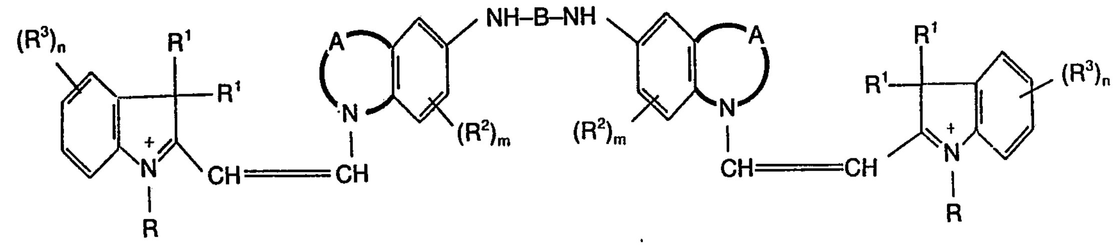

$2X^-$

dans laquelle

R et $R^1$ représentent chacun, indépendamment l'un de l'autre, un groupe alkyle, les deux groupes $R^1$ pouvant également être reliés ensemble sous forme d'un cycle,

$R^2$ représente un groupe alkyle, alcoxy ou un halogène,

$R^3$ représente un groupe alkyle, un halogène, un groupe alcoxy, aryloxy, aryle, aralcoxy, aralkyle, carboxyle, un ester alkylique d'acide carboxylique, un groupe carboxamide ou sulfonamide éventuellement substitué par un ou deux groupes alkyles, un groupe alkylsulfonyle, arylsulfonyle, un groupe cyano, nitro ou acyle, et

A représente un groupe $-(CH_2)_2-$ ou $-(CH_2)_3-$, qui peut éventuellement être substitué par un groupe alkyle,

B représente un groupe de formules

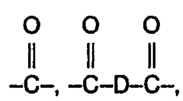

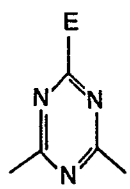

ou

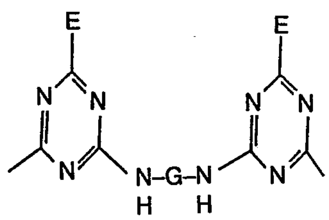

dans lesquelles

D représente un groupe alkylène ou arylène,

E représente un halogène, un groupe hydroxy, alcoxy ou un groupe de formule

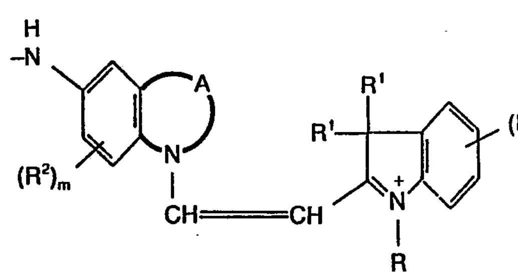

$X^-$

ou

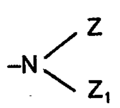

dans lequel

Z et $Z^1$ représentent chacun, indépendamment l'un de l'autre, l'hydrogène ou le groupe $-Y-Z^2$ dans lequel

Y représente un groupe alkylène, et

$Z^2$ représente l'hydrogène, un groupe hydroxy, pyridinium ou un groupe

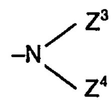

ou

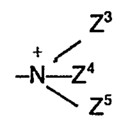

$X^-$

dans lequel

$Z^3$, $Z^4$ et $Z^5$ représentent chacun, indépendamment les uns des autres l'hydrogène ou un groupe alkyle,

$Z^3$ pouvant en outre représenter un groupe aryle, aralkyle ou le groupe

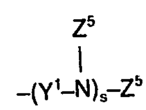

dans lequel

$Y^1$ représente un groupe alkylène, et

s est un nombre allant de 1 à 8,

ou bien

Z et $Z^1$ d'une part, $Z^3$ et $Z^4$ d'autre part, sont reliés entre eux avec formation d'un cycle et forment avec l'atome d'azote un cycle pyrrolidine, morpholine, pipéridine ou pipérazine qui peut être substitué par un groupe alkyle en C 1–C 4,

G représente un groupe alkylène, arylène ou un groupe de formule

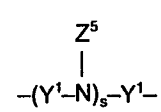

n et m représentent chacun, indépendamment l'un de l'autre, 0, 1 ou 2, et

$X^-$ représente un anion, et dans lesquels les groupes cycliques et acycliques peuvent être substitués par les groupes non ioniques usuels dans la chimie des colorants.

2. Colorants cationiques d'énamines selon la revendication 1, répondant à la formule générale

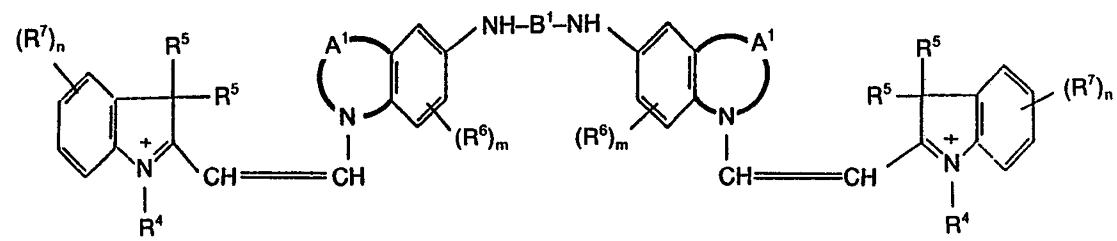

2X⁻

dans laquelle

$R^4$ représente un groupe alkyle en C 1–C 4 éventuellement substitué par des groupes hydroxy, alcoxy en C1–C 4, acétoxy, des halogènes, des groupes cyano, carboxy, carbalcoxy en C 1–C 4, carboxamido ou acétyle,

$R^5$ représente un groupe alkyle en C 1–C 4, les deux groupes $R^5$ pouvant également former ensemble un cycle, de préférence un cycle cyclopentyle ou cyclohexyle,

$R^6$ représente un groupe alkyle en C 1–C 4, un groupe alcoxy en C 1–C 4 ou un halogène,

$R^7$ représente un groupe alkyle en C 1–C 4, un halogène, un groupe alcoxy en C 1–C 4, phénoxy, benzyloxy, benzyle, carboxyle, un ester alkylique d'acide carboxylique en C 1–C 4, un groupe carboxamide ou sulfonamide éventuellement substitué par un ou deux groupes alkyle en C 1–C 4, un groupe alkylsulfonyle en C 1–C 4, phénylsulfonyle, cyano, nitro, trifluorométhyle, acétyle ou benzoyle, et

$A^1$ représente un groupe $-(CH_2)_2-$ ou $-(CH_2)_3-$ qui peut le cas échéant être substitué par des groupes alkyle en C 1–C 4,

$B^1$ représente un groupe de formule

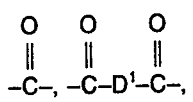

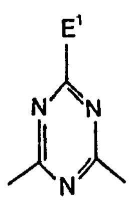

ou

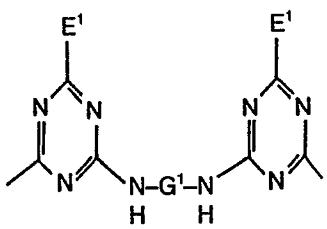

$D^1$ représente un groupe alkylène en C 2–C 6, phénylène ou naphtylène,

$E^1$ représente un halogène, un groupe hydroxy, alcoxy en C 1–C 4 ou un groupe de formule

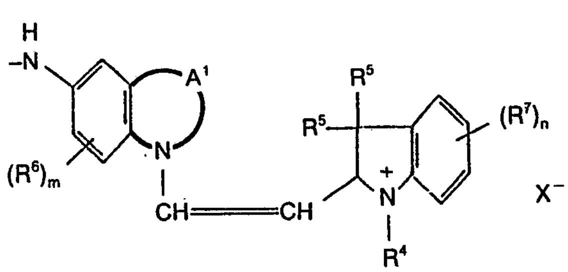

X⁻

ou

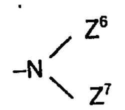

dans lequel

$Z^6$ et $Z^7$ représentent chacun, indépendamment l'un de l'autre, l'hydrogène ou le groupe $-Y^1-Z^8$ dans lequel

$Y^1$ représente un groupe alkylène en C 1–C 6,

$Z^8$ représente l'hydrogène, un groupe hydroxy, pyridinium ou un groupe

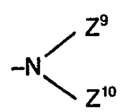

ou

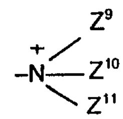

X⁻

dans lequel

$Z^9$, $Z^{10}$ et $Z^{11}$ représentent chacun, indépendamment les uns des autres, l'hydrogène ou un groupe alkyle en C 1–C 4 éventuellement substitué par un groupe hydroxy,

$Z^9$ pouvant en outre représenter un groupe phényle, benzyle ou

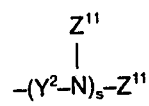

dans lequel

$Y^2$ représente un groupe alkylène en C 2–C 4, et

s a une valeur de 1 à 8,

ou bien

$Z^6$ et $Z^7$ d'une part, $Z^9$ et $Z^{10}$ d'autre part, sont reliés avec formation d'un cycle et forment avec l'atome d'azote un cycle pyrrolidine, morpholine, pipéridine ou pipérazine qui peut être substitué par des groupes alkyle en C 1–C 4 ou aminoalkyle en C 1–C 4,

$G^1$ représente un groupe alkylène en C 2–C 6, phénylène ou un groupe de formule

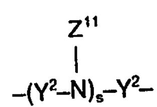

n et m sont égaux, indépendamment l'un de l'autre, à 0, 1 ou 2, et

X⁻ représente un anion.

3\. Colorants cationiques d'énamines selon la revendication 2 de formule générale

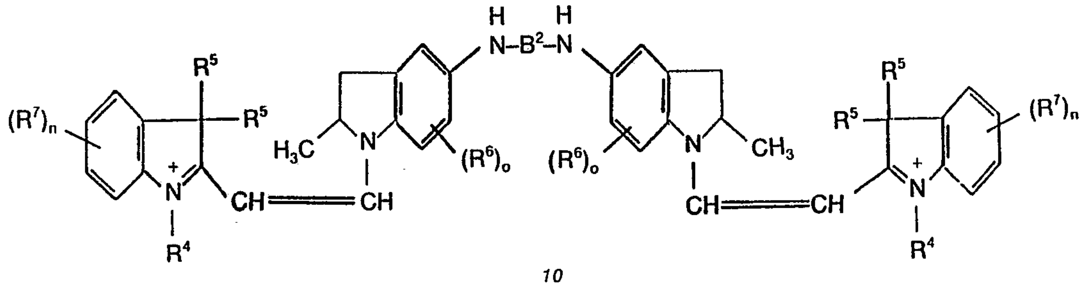

$2X^-$

dans laquelle

o est égal à 0 ou 1, plus spécialement à 0,

$B^2$ représente un groupe de formule

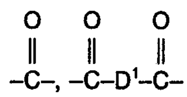

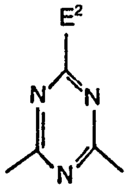

ou

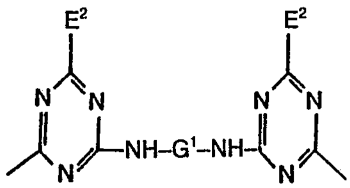

et

$E^2$ représente un halogène, un groupe hydroxy, alcoxy en C 1–C 4 ou un groupe de formule

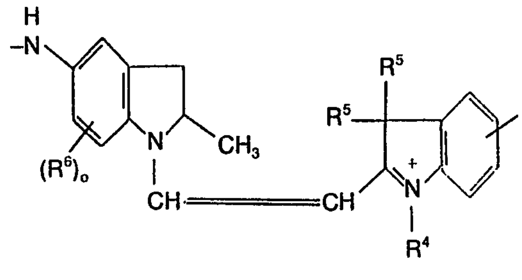

$X^-$

ou

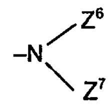

et

$R^4$, $R^5$, $R^6$, $R^7$, $D^1$, $G^1$, $Z^6$, $Z^7$, n et $X^-$ ont les significations indiquées dans la revendication 2.

4. Colorants cationiques d'énamines selon la revendication 2, de formule générale

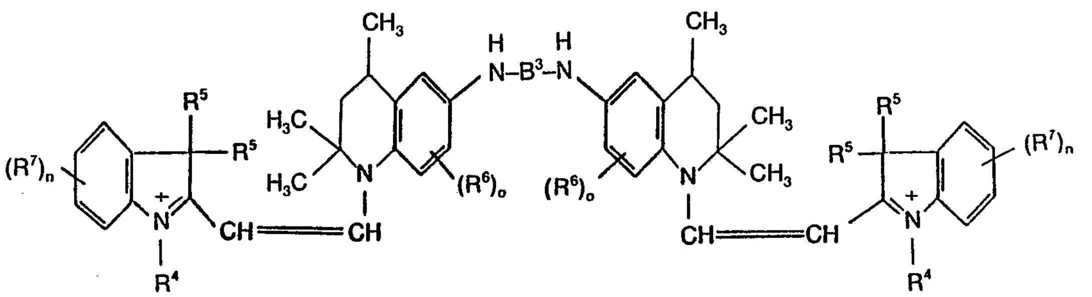

$2X^-$

dans laquelle

o est égal à 0 ou 1, de préférence à 0,

$B^3$ représente un groupe de formule

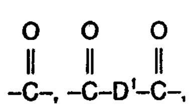

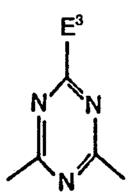

ou

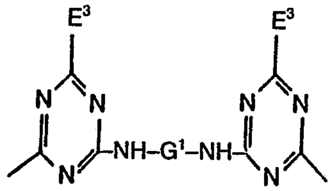

et

$E^3$ représente un halogène, un groupe hydroxy, alcoxy en C 1–C 4 ou un groupe de formule

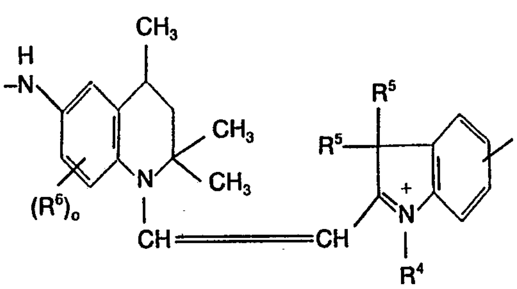

$X^-$

ou

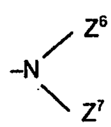

et

$R^4$, $R^5$, $R^6$, $R^7$, $D^1$, $G^1$, $Z^6$, $Z^7$, n et $X^-$ ont les significations indiquées dans la revendication 2.

5. Colorants cationiques d'énamines répondant aux formules des revendications 3 et 4 dans lesquelles

$R^4$ représente un groupe méthyle, éthyle ou hydroxyalkyle en C 2–C 4,

$R^5$ représente un groupe méthyle ou éthyle,

$R^7$ représente un groupe alkyle en C 1–C 4, un halogène ou un groupe alcoxy en C 1–C 4,

$B^2$ représente –CO-,

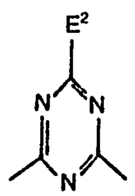

ou

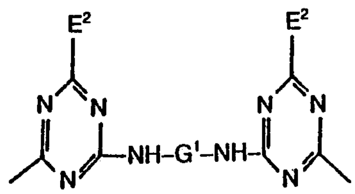

$E^2$ représente un halogène, un groupe hydroxy, alcoxy en C 1–C 4 ou

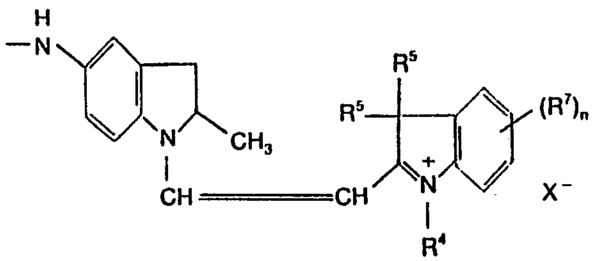

$B^3$ représente –CO-,

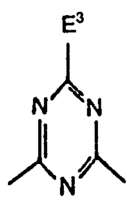

ou

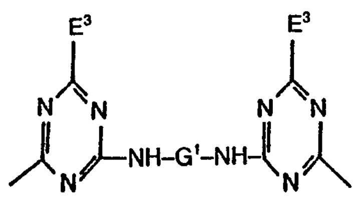

$E^3$ représente un halogène, un groupe hydroxy, alcoxy en C 1–C 4 ou

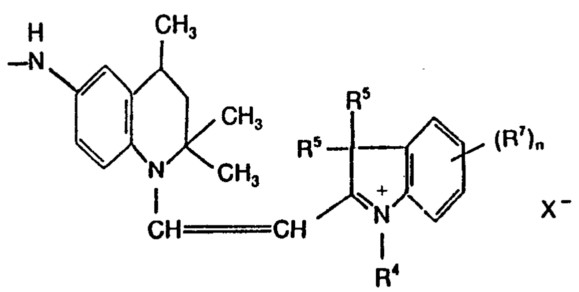

o est égal à 0, et

n est égal à 0 ou 1.

6. Procédé de préparation des colorants selon la revendication 1, caractérisé en ce que l'on fait réagir des composés de formule générale

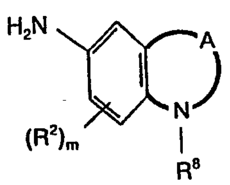

dans laquelle

$R^2$, A et m ont les significations indiquées dans la revendication 1, et

$R^8$ représente un groupe acyle,

avec des composés dihalogénés de formule générale

Hal–B–Hal

dans laquelle

B a les significations indiquées en référence à la revendication 1, et

Hal représente un halogène,

ce qui donne des composés de formule

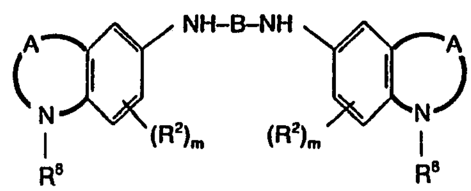

qu'on condense après élimination du groupe acyle $R^8$, avec des composés de formule générale

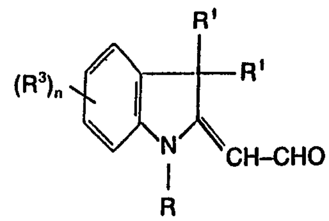

dans laquelle

R, $R^1$, $R^3$, m et n ont les significations indiquées dans la revendication 1.

7. Procédé selon la revendication 6, caractérisé en ce que l'on fait réagir des composés de formule générale

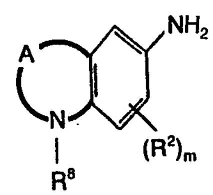

dans laquelle

A, $R^2$ et m ont les significations indiquées dans la revendication 1, et

$R^8$ représente un groupe acyle,

avec le chlorure de cyanuryle, dans un rapport molaire de 1 : 1, ce qui donne des composés de formule générale

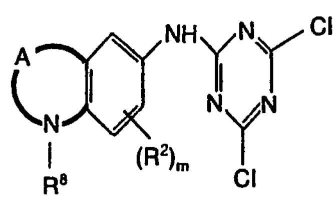

qu'on fait réagir dans un rapport molaire de 2 : 1 avec une diamine de formule générale

$H_2N–G–NH_2$,

dans laquelle G a les significations indiquées dans la revendication 1, ce qui donne des composés de formule générale

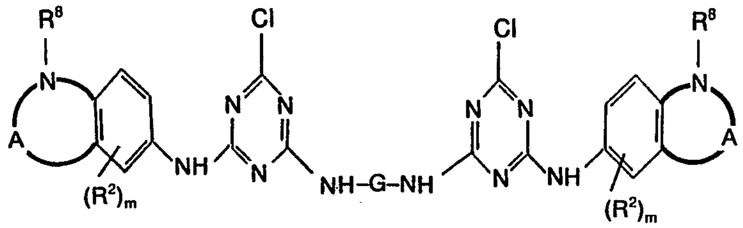

après quoi on condense ce produit de réaction en milieu acide, finalement, après élimination du groupe acyle $R^8$, avec des composés de formule générale

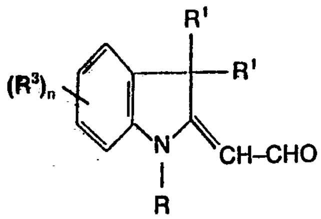

dans laquelle R, $R^1$, $R^3$, m et n ont les significations indiquées dans la revendication 1.

8. Procédé selon la revendication 6, caractérisé en ce que l'on condense directement, avec formation des colorants de la revendication 1, des composés de formule générale

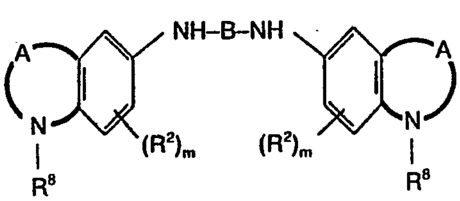

dans laquelle

$R^2$, A, B et m ont les significations indiquées dans la revendication 1 et

$R^8$ représente le groupe formyle,

avec des composés de formule générale

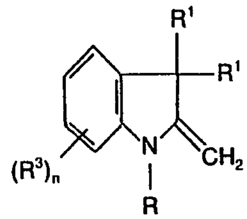

dans laquelle R, $R^1$, $R^3$ et n ont les significations indiquées dans la revendication 1.

9. Procédé pour teindre des supports et masses naturels et synthétiques aptes à la teinture par colorants cationiques, caractérisé en ce que l'on utilise des colorants de la revendication 1.

10. Procédé pour colorer le papier dans la masse et en surface, caractérisé en ce que l'on utilise des colorants de la revendication 1.